# FASCICULE DE BREVET EUROPEEN

(11) **EP 4 436 792 B1**
(45) Date de publication et mention de la délivrance du brevet: **24.09.2025**
(21) Numéro de dépôt: 22822062.0
(22) Date de dépôt: 24.11.2022
(51) Int. Cl.: B60C 1/00, C08L 9/06, C08L 7/00, C08K 5/39, C08K 5/40, C08K 5/5398, C08K 5/38

(54) **MÉLANGE DE CAOUTCHOUC COMPRENANT UN ACCÉLÉRATEUR DE VULCANISATION RAPIDE**
KAUTSCHUKMISCHUNG MIT SCHNELLVULKANISIERUNGSBESCHLEUNIGER
RUBBER MIXTURE COMPRISING A RAPID VULCANISATION ACCELERATOR

(30) Priorité: 26.11.2021 FR 2112589
(43) Date de publication de la demande: 02.10.2024
(73) Titulaire: COMPAGNIE GENERALE DES ETABLISSEMENTS MICHELIN, 63000 Clermont-Ferrand (FR)
(72) Inventeur: PRAS, Maxime, 63040 CLERMONT-FERRAND CEDEX 09 (FR); ARAUJO DA SILVA, José-Carlos, 63040 CLERMONT-FERRAND CEDEX 09 (FR); BADAIRE, Stephane, 63040 CLERMONT-FERRAND CEDEX 09 (FR); DURIEZ, Simon, 63040 CLERMONT-FERRAND CEDEX 09 (FR)
(74) Mandataire: M.F.P. Michelin
(86) Numéro de dépôt international: PCT/EP2022/083134
(87) Numéro de publication internationale: WO 2023/094523

(56) Documents cités:
- EP-A1- 3 372 638
- JP-A- H0 827 313

## Description

Mélange de caoutchouc comprenant un accélérateur de vulcanisation rapide Le domaine de la présente invention est celui des mélanges de caoutchouc renforcés, notamment utilisés dans la confection de pneumatiques pour véhicules, plus particulièrement utilisés pour la fabrication de bandes de roulement.

Une des exigences requises pour un pneumatique est d'assurer une adhérence optimale sur route, notamment sur sol mouillé. Une façon de conférer au pneumatique une adhérence élevée sur sol mouillé est d'utiliser une composition de caoutchouc dans sa bande de roulement, laquelle composition présente un large potentiel hystérétique. Mais en même temps la bande de roulement de pneumatique doit aussi minimiser sa contribution à la résistance au roulement du pneumatique, c'est à dire être la moins hystérétique possible.

Ainsi, la composition de caoutchouc, notamment de la bande de roulement, doit-elle satisfaire à deux exigences antinomiques, à savoir présenter un potentiel d'hystérèse maximal pour satisfaire à l'exigence d'adhérence et présenter une hystérèse aussi faible que possible pour satisfaire à l'exigence de résistance au roulement.

L'amélioration de la résistance au roulement a été rendu possible grâce à l'emploi de nouvelles compositions de caoutchouc renforcées de charges inorganiques, en particulier de silices spécifiques du type hautement dispersibles, capable de rivaliser du point de vue renforçant avec un noir de carbone conventionnel de grade pneumatique, tout en offrant à ces compositions une hystérèse plus faible, synonyme d'une plus basse résistance au roulement.

Toutefois, l'utilisation d'un taux élevé de charges renforçantes inorganiques dans les compositions de caoutchouc présente l'inconvénient de pénaliser les propriétés d'adhérence sur sol mouillé des compositions de caoutchouc dans lesquelles elles sont incorporées.

Satisfaire à la fois à l'exigence d'adhérence, notamment sur sol mouillé, et de résistance au roulement reste donc une préoccupation constante des manufacturiers de pneumatiques.

Ainsi, JPH0827313A décrit une composition élastomérique diénique pour un bandage pneumatique présentant un bon équilibre entre l'adhérence sur sol mouillé et une faible résistance au roulement sans nuire à la résistance à l'usure du pneu.

Dans l'optique de rechercher le meilleur compromis de performances, notamment entre la résistance au roulement et l'adhérence sur sol mouillé, les manufacturiers de pneumatiques élaborent des compositions de caoutchouc de plus en plus complexes, intégrant souvent plusieurs élastomères de nature chimique différente formant ainsi un mélange de caoutchouc et créant des phases différentes. Des exemples de mélanges de caoutchouc complexes sont décrits dans le document FR20/05862 appartenant à la demanderesse. Dans ce document, ces mélanges de caoutchouc complexes sont définis par deux températures de transition vitreuse notées Tg1 et Tg2 avec Tg1 -Tg2 ≥ 23°C, et par un profil de facteur de perte spécifique étant mesuré sur un intervalle de température allant de -80°C à 60°C à une fréquence de 10 Hz et à une contrainte constante de 0,7 MPa spécifique ; ces mélanges de caoutchouc complexes présentant une amélioration du compromis résistance au roulement /adhérence sur sol mouillé.

Poursuivant ses recherches, la Demanderesse a cherché à améliorer davantage encore ce compromis de résistance pour ces certains de ses mélanges de caoutchouc complexes.

Elle a découvert d'une manière surprenante qu'un mélange de caoutchouc ayant un profil de facteur de perte particulier, le profil de facteur de perte étant mesuré sur un intervalle de température allant de -80°C à 60 °C à une fréquence de 10 Hz et à une contrainte constante de 0,7 MPa, et étant à base d'une combinaison d'au moins un système de vulcanisation spécifique et d'au moins deux compositions de caoutchouc C1 et C2 ayant des températures de transition vitreuse différentes et dont la différence de ces températures de transition vitreuse est supérieure ou égale à 23°C et dans lequel l'élastomère de la composition C1 étant majoritaire dans le mélange, l'élastomère de la composition C2 étant un élastomère diénique isoprénique et le système de vulcanisation comprenant un ultra-accélérateur spécifique, présentait une meilleure résistance au roulement tout en conservant de bonne propriétés d'adhérence sur sol mouillé, voire même des propriétés d'adhérence sur sol améliorées.

Ainsi, un premier objet de l'invention concerne un mélange de caoutchouc présentant au moins deux température de transition vitreuse Tg, Tg1 et Tg2, à base d'au moins un système de vulcanisation au soufre et d'au moins deux compositions de caoutchouc C1 et C2, la composition de caoutchouc C1 comprenant au moins un élastomère E1, et présentant la température de transition vitreuse Tg1, la composition C2 comprenant au moins un élastomère E2, différent de l'élastomère E1 et une charge renforçante, et la composition C2 présentant la température de transition vitreuse Tg2, caractérisé en ce que :
- la température de transition vitreuse Tg1 de la composition C1 est supérieure ou égale à -50°C ;
- le mélange de caoutchouc satisfait la relation mathématique Tg1 -Tg2 ≥ 23°C ;
- le mélange de caoutchouc a un profil de facteur de perte présentant l'évolution de tan δ en fonction de la température en °C, le profil de facteur de perte étant mesuré sur un intervalle de température allant de -80°C à 60 °C à une fréquence de 10 Hz et à une contrainte constante de 0,7 MPa et présentant un ou plusieurs pics, ce profil étant tel que tous les pics de tan δ présents à une température supérieure à la température de transition vitreuse Tg1, présentent une largeur à mi-hauteur inférieure ou égale à 23°C ;
- l'élastomère E1 est majoritaire dans le mélange de caoutchouc ;
- l'élastomère E2 est un élastomère diénique isoprénique ; et
- le système de vulcanisation au soufre comprend au moins un accélérateur de vulcanisation A choisi dans le groupe constitué par les thiurames, les dithiocarbamates, les dithiophosphates, les xanthates et leurs mélanges.

Préférentiellement, le mélange de caoutchouc satisfait la relation mathématique Tg1 -Tg2 ≥ 25°C, de préférence Tg1 -Tg2 ≥ 28°C.

Avantageusement, le mélange de caoutchouc peut satisfaire la relation mathématique 25°C ≤Tg1 -Tg2 ≤ 40°C.

Avantageusement, la température de transition vitreuse Tg2 de la composition C2 peut être inférieure ou égale à -43°C, de préférence inférieure ou égale à -50°C.

Avantageusement, la température de transition vitreuse Tg2 de la composition C2 est comprise dans un domaine allant de -90°C à -43°C, de préférence allant de -85°C à -50°C.

Avantageusement, l'élastomère E2 de la composition de caoutchouc C2 est un élastomère diénique isoprénique choisi dans le groupe constitué par le caoutchouc naturel et le polyisoprène de synthèse, plus préférentiellement encore le caoutchouc naturel.

Avantageusement, la température de transition vitreuse TgE2 de l'élastomère E2 peut être comprise dans un domaine allant de -110°C à -23°C, de préférence allant de -100°C à -28°C, plus préférentiellement allant de -95°C à -30°C.

Préférentiellement, la charge renforçante de la composition C2 peut comprendre majoritairement au moins une charge renforçante inorganique, plus préférentiellement peut comprendre majoritairement au moins une silice.

Avantageusement, la charge renforçante de la composition C2 peut comprendre majoritairement une charge inorganique renforçante, préférentiellement majoritairement une silice, et l'élastomère diénique isoprénique E2 peut être le caoutchouc naturel.

Avantageusement, la température de transition vitreuse Tg1 de la composition de caoutchouc C1 peut être comprise dans un domaine allant de -48°C à -15°C, plus préférentiellement peut être comprise dans un domaine allant de -40°C à -15°C.

Avantageusement, la température de transition vitreuse Tg1 de la composition de caoutchouc C1 peut être supérieure ou égale à -48°C, de préférence supérieure ou égale à -40°C.

Avantageusement, l'élastomère E1 de la composition de caoutchouc C1 peut être un élastomère diénique. De préférence, l'élastomère E1 de la composition de caoutchouc C1 est un élastomère diénique non-fonctionnalisé.

Avantageusement, l'élastomère E1 de la composition de caoutchouc C1 est un élastomère diénique choisi dans le groupe constitué par les polybutadiènes, les copolymères de butadiène et de styrène, les copolymères de butadiène et d'isoprène, les copolymères d'isoprène et de styrène, les copolymères de butadiène-styrène-isoprène et leurs mélanges. Préférentiellement, l'élastomère E1 de la composition de caoutchouc C1 est un élastomère diénique choisi dans le groupe constitué par les polybutadiènes, les copolymères de butadiène et de styrène et leurs mélanges. Plus préférentiellement encore, l'élastomère E1 de la composition C1 est un copolymère de styrène et de butadiène, notamment non fonctionnalisé.

Avantageusement, la température de transition vitreuse TgE1 de l'élastomère E1 peut être comprise dans un domaine allant de -50°C à 0°C, plus préférentiellement de -40°C à 0°C, plus préférentiellement de -30°C à 0°C.

Avantageusement, le taux de l'élastomère E1 dans le mélange de caoutchouc peut être compris dans un domaine allant 50 pce à 70 pce, de préférence de 55 pce à 70 pce, plus préférentiellement de 55 pce à 65 pce.

Avantageusement, la composition C1 peut comprendre en outre une charge renforçante.

Avantageusement, le mélange de caoutchouc peut comprendre au moins un plastifiant.

Avantageusement, le mélange de caoutchouc tel que défini ci-dessus et ses modes de réalisation préférentiels peut être obtenu selon un procédé de fabrication qui comprend les étapes suivantes :
- préparer la composition de caoutchouc C1 dans un mélangeur interne en introduisant l'élastomère E1 de la composition de caoutchouc C1 et le cas échéant les autres ingrédients tels qu'un plastifiant et conduire un travail thermomécanique jusqu'à une température maximale de 200°C pour obtenir la composition de caoutchouc C1 ;
- préparer la composition de caoutchouc C2 dans un mélangeur interne en introduisant l'élastomère E2, élastomère diénique isoprénique, de la composition de caoutchouc C2, la charge renforçante le cas échéant les autres ingrédients tels qu'un plastifiant ou un agent de couplage de la charge renforçante, et conduire un travail thermomécanique jusqu'à une température maximale de 200°C pour obtenir la composition de caoutchouc C2;
- introduire dans un mélangeur interne les compositions de caoutchouc C1 et C2 obtenues aux étapes précédentes et conduire un travail thermomécanique jusqu'à une température maximale de 180°C pour obtenir une combinaison de compositions ;
- récupérer la combinaison de compositions de l'étape précédente et la refroidir à une température inférieure ou égale à 110°C ;
- incorporer dans la combinaison de compositions refroidie le système de vulcanisation au soufre ; le système de vulcanisation au moins un accélérateur de vulcanisation A choisi dans le groupe constitué par les thiurames, les dithiocarbamates, les dithiophosphates, les xanthates et leurs mélanges, et malaxer cet ensemble jusqu'à une température maximale inférieure à 110°C, préférentiellement inférieure à 80°C, et récupérer le mélange de caoutchouc.

Un autre objet de la présente invention concerne une bande de roulement de bandage pneumatique ou non pneumatique comprenant au moins un mélange de caoutchouc défini ci-dessus.

Un autre objet de la présente invention concerne un bandage pneumatique ou non pneumatique comprenant au moins un mélange de caoutchouc défini ci-dessus ou comprenant au moins une bande de roulement définie ci-dessus.

Par « mélange de caoutchouc à base d'au moins », il faut entendre une combinaison d'au moins deux compositions de caoutchouc. Le mélange de caoutchouc peut être ainsi être à l'état totalement ou partiellement réticulé ou à l'état non-réticulé.

Par « composition de caoutchouc à base de », il faut entendre une composition comportant le mélange et/ou le produit de réaction in situ des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par l'expression « partie en poids pour cent parties en poids d'élastomère » (ou pce), il faut entendre au sens de la présente invention, la partie, en masse pour cent parties en masse d'élastomères dans le mélange de caoutchouc.

Dans la présente, sauf indication expresse différente, tous les pourcentages (%) indiqués sont des pourcentages (%) en masse.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Lorsqu'on fait référence à un composé « majoritaire », on entend au sens de la présente invention, que ce composé est majoritaire parmi les composés du même type dans le mélange de caoutchouc, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères du mélange. De la même manière, une charge dite majoritaire est celle représentant la plus grande masse parmi les charges du mélange. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères. Au contraire, un composé « minoritaire » est un composé qui ne représente pas la fraction massique la plus grande parmi les composés du même type. De préférence par majoritaire, on entend présent à plus de 50 %, de préférence plus de 60 %, 70 %, 80 %, 90 %, et plus préférentiellement le composé « majoritaire » représente 100 %.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Evidemment, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage. Sont concernés notamment les polymères, les plastifiants, les charges, etc. »

Les températures de transition vitreuse, notée Tg1 et Tg2, du mélange de caoutchouc de l'invention sont mesurées selon la norme NF EN ISO 11357-2 :05-2014 sur le mélange de caoutchouc.

Les températures de transition vitreuse des élastomères, notée TgE1 et TgE2, sont mesurées selon la norme ASTM D3418 : 2008 sur les élastomères.

Le facteur de perte, aussi appelé tan δ (aussi écrit tan delta) est une grandeur physique bien connue des manufacturiers de bandages pneumatiques. Le facteur de perte représente la fraction d'énergie dissipée durant une sollicitation cyclique.

Le profil de facteur de perte représente l'évolution du facteur de perte, tan δ, en fonction de la température lorsqu'on exerce une contrainte constante à une fréquence donnée. Dans le cadre de la présente invention, le profil de facteur de perte est mesuré sur un intervalle de température allant de -80°C à 60 °C à une fréquence de 10 Hz et à une contrainte constante de 0,7 MPa selon la norme ASTM D 5992 - 96.

### Ingrédients des compositions de caoutchouc C1 et C2

Les compositions de caoutchouc C1 et C2 formant le mélange de caoutchouc selon l'invention comprennent chacune au moins un élastomère, respectivement élastomère E1 et élastomère diénique E2 ; l'élastomère E1 étant différent de l'élastomère diénique E2 ; c'est-à-dire que l'élastomère E1 n'a pas la même nature chimique que l'élastomère diénique E2.

Par « élastomère », on entend un polymère qui est souple, déformable, présentant une élasticité de type caoutchouc selon la définition IUPAC des élastomères. De préférence, les élastomères E1 et E2 utilisables dans le cadre de la présente invention sont des élastomères statistiques.

Préférentiellement, l'élastomère E1 de la composition de caoutchouc C1 est un élastomère diénique.

Par « élastomère diénique ou indistinctement caoutchouc », qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

Par « matrice élastomérique », on entend l'ensemble des élastomères formant le mélange de caoutchouc de l'invention.

Les élastomères diéniques peuvent être classés dans deux catégories : « essentiellement insaturés » ou « essentiellement saturés ». On entend en général par « essentiellement insaturés », un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques « essentiellement saturés » (taux de motifs d'origine diénique faible ou très faible, toujours inférieur à 15%).

On entend, plus particulièrement, par élastomère diénique susceptible d'être utilisé dans les mélanges de caoutchouc conformes à l'invention :
- tout homopolymère d'un monomère diène, conjugué ou non, ayant de 4 à 18 atomes de carbone ;
- tout copolymère d'un diène, conjugué ou non, ayant de 4 à 18 atomes de carbone et d'au moins un autre monomère.

L'autre monomère peut être une oléfine ou un diène, conjugué ou non.

A titre de diènes conjugués conviennent les diènes conjugués ayant de 4 à 12 atomes de carbone, en particulier les 1,3-diènes, tels que notamment le 1,3-butadiène et l'isoprène.

A titre de diènes non conjugués conviennent les diènes non conjugués ayant de 6 à 12 atomes de carbone, tels que le 1,4-hexadiène, l'éthylidène norbornène, le dicyclopentadiène.

A titre d'oléfines conviennent les composés vinylaromatiques ayant de 8 à 20 atomes de carbone et les α-monooléfines aliphatiques ayant de 3 à 12 atomes de carbone.

A titre de composés vinylaromatiques conviennent par exemple le styrène, l'ortho-, méta-, para-méthylstyrène, le mélange commercial « vinyle-toluène », le para-tertiobutylstyrène.

Plus particulièrement, l'élastomère diénique est :
- tout homopolymère d'un monomère diène conjugué, notamment tout homopolymère obtenu par polymérisation d'un monomère diène conjugué ayant de 4 à 12 atomes de carbone;
- tout copolymère obtenu par copolymérisation d'un ou plusieurs diènes conjugués entre eux ou avec un ou plusieurs composés vinylaromatiques ayant de 8 à 20 atomes de carbone;
- un copolymère d'isobutène et d'isoprène (caoutchouc butyle), ainsi que les versions halogénées, en particulier chlorées ou bromées, de ce type de copolymère.

### Charge renforçante

La composition de caoutchouc C2 comprend une ou plusieurs charges renforçantes.

Selon un mode de réalisation de l'invention, la composition de caoutchouc C1 peut optionnellement comprendre également une ou plusieurs charges renforçantes. Dans ce mode de réalisation, le taux de la charge renforçante de la composition C1 est inférieure au taux de la charge renforçante de la composition C2.

On peut utiliser tout type de charge dite renforçante, connue pour ses capacités à renforcer une composition de caoutchouc utilisable notamment pour la fabrication de bandages pneumatiques, par exemple une charge organique telle que du noir de carbone, une charge inorganique telle que de la silice ou encore un mélange de ces deux types de charges.

Comme noirs de carbone conviennent tous les noirs de carbone, notamment les noirs conventionnellement utilisés dans les bandages pneumatiques ou les bandages non-pneumatique ou leurs bandes de roulement. Parmi ces derniers, on citera plus particulièrement les noirs de carbone renforçants de la série 200 comme par exemple le N234. Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, (voir par exemple demandes WO97/36724-A2 ou WO99/16600-A1).

Comme exemple de charges organiques autres que des noirs de carbone, on peut citer les charges organiques de polyvinyle fonctionnalisé telles que décrites dans les demandes WO2006/069792-A1, WO2006/069793-A1, WO2008/003434-A1 et WO2008/003435-A1.

Par « charge inorganique renforçante », doit être entendu ici toute charge inorganique ou minérale, quelles que soient sa couleur et son origine (naturelle ou de synthèse), encore appelée charge « blanche », charge « claire » ou même charge « non-noire » par opposition au noir de carbone, capable de renforcer à elle seule, sans autre moyen qu'un agent de couplage intermédiaire, une composition de caoutchouc destinée à la fabrication de bandages pneumatiques ou non pneumatiques. De manière connue, certaines charges inorganiques renforçantes peuvent se caractériser notamment par la présence de groupes hydroxyle (-OH) à leur surface.

Comme charges inorganiques renforçantes conviennent notamment des charges minérales du type siliceux, préférentiellement la silice (SiO₂) ou du type alumineux, en particulier l'alumine (Al₂O₃).

La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 m²/g, de préférence comprises dans un domaine allant de 30 à 400 m²/g, notamment de 60 à 300 m²/g. On peut utiliser tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ^{®} 5000GR », « Ultrasil ^{®} 7000GR » de la société Evonik, les silices « Zeosil ^{®} 1085GR», « Zeosil^{®} 1115 MP », « Zeosil^{®} 1165MP », « Zeosil^{®} Premium 200MP », « Zeosil^{®} HRS 1200 MP » de la Société Solvay. À titre de silice non HDS, les silices commerciales suivantes peuvent être utilisées : les silices « Ultrasil ^{®} VN2GR », « Ultrasil ^{®} VN3GR » de la société Evonik, la silice « Zeosil^{®} 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

L'état physique sous lequel se présente la charge inorganique renforçante est indifférent, que ce soit sous forme de poudre, de microperles, de granulés, ou encore de billes ou toute autre forme densifiée appropriée. Bien entendu, on entend également par charge inorganique renforçante des mélanges de différentes charges inorganiques renforçantes, en particulier de silices telles que décrites ci-dessus.

L'homme du métier comprendra qu'en remplacement de la charge inorganique renforçante décrite ci-dessus, pourrait être utilisée une charge renforçante d'une autre nature, dès lors que cette charge renforçante d'une autre nature serait recouverte d'une couche inorganique telle que de la silice, ou bien comporterait à sa surface des sites fonctionnels, notamment hydroxyles, nécessitant l'utilisation d'un agent de couplage pour établir la liaison entre cette charge renforçante et la matrice élastomérique.

L'homme du métier saura adapter le taux de charge renforçante total selon l'utilisation concernée du mélange de caoutchouc de l'invention, notamment selon le type de bandages pneumatiques concerné, par exemple bandage pneumatique pour moto, pour véhicule de tourisme ou encore pour véhicule utilitaire tel que camionnette ou poids lourd.

Dans le présent exposé, la surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,17]. Pour les charges inorganiques telles que la silice par exemple, les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante. Pour les noirs de carbone, la surface spécifique STSA est déterminée selon la norme ASTM D6556-2016.

Les agents de couplage de la charge renforçante :
De manière connue, pour coupler la charge renforçante, on peut utiliser un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère, de préférence diénique. Par exemple, un tel composé bifonctionnel peut comprendre un premier groupe fonctionnel comprenant un atome de silicium, le dit premier groupe fonctionnel étant apte à interagir avec les groupes hydroxyles d'une charge renforçante inorganique et un second groupe fonctionnel comprenant un atome de soufre, ledit second groupe fonctionnel étant apte à interagir avec l'élastomère, de préférence diénique.

Préférentiellement, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que l'octanethioate de S-(3-(triéthoxysilyl)propyle)commercialisé par la société Momentive sous la dénomination « NXT Silane ». Plus préférentiellement, l'organosilane est un organosilane polysulfuré.

Bien entendu pourraient être également utilisés des mélanges des agents de couplage précédemment décrits.

### Les agents de recouvrement

Les compositions de caoutchouc formant le mélange de caoutchouc de l'invention peuvent également contenir des agents de recouvrement de la charge inorganique renforçante lorsqu'une charge inorganique renforçante est utilisée dans une composition du mélange de l'invention, permettant d'améliorer leur faculté de mise en œuvre à l'état cru. Ces agents de recouvrement sont bien connus (voir par exemple les demandes de brevet WO2006/125533-A1, WO2007/017060-A1 et WO2007/003408-A1), on citera par exemple des silanes hydrolysables tels que des hydroxysilanes (voir par exemple WO2009/062733-A2) des alkylalkoxysilanes, des polyols (par exemple diols ou triols), des polyéthers (par exemple des polyéthylène-glycols), des amines primaires, secondaires ou tertiaires, des polyorgano-siloxanes hydroxylés ou hydrolysables (par exemple des α,ω-dihydroxy-poly-organosilanes (voir par exemple EP0784072-A1).

### Plastifiants

Les compositions de caoutchouc formant le mélange de caoutchouc de l'invention peuvent comprendre au moins un plastifiant.

De manière connue de l'homme de l'art des compositions de caoutchouc pour bandages pneumatiques ou non pneumatiques, ce plastifiant est de préférence choisi parmi les résines hydrocarbonées de haute température de transition vitreuse (Tg), les résines hydrocarbonées de faible Tg, les huiles plastifiantes, et leurs mélanges. De préférence, le plastifiant est choisi parmi les résines hydrocarbonées de haute Tg, les huiles plastifiantes, et leurs mélanges.

De manière connues, les plastifiants dans les compositions de caoutchouc permettent de modifier la viscosité d'une composition de caoutchouc, d'ajuster la température de transition vitreuse de la composition de caoutchouc par rapport à son optimum d'utilisation.

Une résine hydrocarbonée de haute Tg est par définition un solide à température et pression ambiante (20°C, 1 atm), tandis qu'une huile plastifiante est liquide à température ambiante et pression et qu'une résine hydrocarbonée de faible Tg est visqueuse à température ambiante et pression.

Les résines hydrocarbonées, appelées aussi résines plastifiantes hydrocarbonées, sont des polymères bien connus de l'homme du métier, essentiellement à base de carbone et hydrogène mais pouvant comporter d'autres types d'atomes, par exemple l'oxygène, utilisables en particulier comme agents plastifiants. Elles sont par nature au moins partiellement miscibles (i.e., compatibles) aux taux utilisés avec les compositions de caoutchouc auxquelles elles sont destinées, de manière à agir comme de véritables agents diluants. Elles ont été décrites par exemple dans l'ouvrage intitulé « Hydrocarbon Resins » de R. Mildenberg, M. Zander et G. Collin (New York, VCH, 1997, ISBN 3-527-28617-9) dont le chapitre 5 est consacré à leurs applications, notamment en caoutchouterie pour bandages pneumatiques (5.5. « Rubber Tires and Mechanical Goods »). De manière connue, ces résines hydrocarbonées peuvent être qualifiées aussi de résines thermoplastiques en ce sens qu'elles se ramollissent par chauffage et peuvent ainsi être moulées. Le point de ramollissement des résines hydrocarbonées est mesuré selon la norme ISO 4625 (méthode « Ring and Ball »). La Tg est mesurée selon la norme ASTM D3418 (2008). La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes « WATERS » en série (« STYRAGEL » HR4E, HR1 et HR0.5) ; détection par réfractomètre différentiel (« WATERS 2410 ») et son logiciel d'exploitation associé (« WATERS EMPOWER »). Les résines hydrocarbonées peuvent être aliphatiques, ou aromatiques ou encore du type aliphatique/ aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). De manière connue, les résines hydrocarbonées de haute Tg sont des résines hydrocarbonées, thermoplastiques, dont la Tg est supérieure à 20°C.

De préférence, le plastifiant peut optionnellement comprendre une résine hydrocarbonée, un solide à température et pression ambiante, dite résine de haute Tg. De préférence, la résine plastifiante hydrocarbonée de haute Tg présente au moins une quelconque des caractéristiques suivantes :
- une Tg supérieure à 30°C ;
- une masse moléculaire moyenne en nombre (Mn) comprise entre 300 et 2000 g/mol, plus préférentiellement entre 400 et 1500 g/mol ;
- un indice de polymolécularité (Ip) inférieur à 3, plus préférentiellement inférieur à 2 (rappel : Ip = Mw/Mn avec Mw masse moléculaire moyenne en poids).

Plus préférentiellement, cette résine plastifiante hydrocarbonée de haute Tg présente l'ensemble des caractéristiques préférentielles ci-dessus.

Le plastifiant peut optionnellement comprendre une résine hydrocarbonée visqueuse à 20 °C, dite « de faible Tg », c'est-à-dire qui par définition présente une Tg comprise dans un domaine allant de -40 °C à 20°C.

De préférence, la résine plastifiante hydrocarbonée de faible Tg présente au moins une quelconque des caractéristiques suivantes :
- une Tg comprise entre -40°C et 0°C, plus préférentiellement entre -30°C et 0°C et plus préférentiellement encore entre -20°C et 0°C ;
- une masse moléculaire moyenne en nombre (Mn) inférieure à 800 g/mol, de préférence inférieure à 600 g/mol et plus préférentiellement inférieure à 400 g/mol ;
- un point de ramollissement compris dans un domaine allant de 0 à 50°C, préférentiellement de 0 à 40°C, plus préférentiellement de 10 à 40°C, de préférence de 10 à 30°C;
- un indice de polymolécularité (Ip) inférieur à 3, plus préférentiellement inférieur à 2 (rappel : Ip = Mw/Mn avec Mw masse moléculaire moyenne en poids).

Plus préférentiellement, cette résine hydrocarbonée de faible Tg présente l'ensemble des caractéristiques préférentielles ci-dessus.

Le plastifiant peut contenir également une huile d'extension (ou huile plastifiante) liquide à 20 °C, dit à « basse Tg », c'est-à-dire qui par définition présente une Tg inférieure à -20 °C, de préférence inférieure à -40 °C. Toute huile d'extension, qu'elle soit de nature aromatique ou non-aromatique connue pour ses propriétés plastifiantes vis-à-vis d'élastomères, est utilisable. A température ambiante (20°C), ces huiles, plus ou moins visqueuses, sont des liquides (c'est-à-dire, pour rappel, des substances ayant la capacité de prendre à terme la forme de leur contenant), par différence notamment avec les résines hydrocarbonées de haute Tg qui sont par nature solides à température ambiante. Conviennent particulièrement les huiles plastifiantes choisies dans le groupe constitué par les huiles naphténiques (à basse ou haute viscosité, notamment hydrogénées ou non), les huiles paraffiniques, les huiles MES (Medium Extracted Solvates), les huiles TDAE (Treated Distillate Aromatic Extracts), les huiles RAE (Residual Aromatic Extract oils), les huiles TRAE (Treated Residual Aromatic Extract) et les huiles SRAE (Safety Residual Aromatic Extract oils), les huiles minérales, les huiles végétales, les plastifiants éthers, les plastifiants esters, les plastifiants phosphates, les plastifiants sulfonates et les mélanges de ces composés.

Les résines hydrocarbonées de haute Tg, les résines hydrocarbonées de basse Tg, et les huiles plastifiantes préférentielles ci-dessus sont bien connues de l'homme du métier et disponibles commercialement.

### Autres additifs

Les compositions de caoutchouc formant le mélange de caoutchouc conforme à l'invention peuvent comporter également tout ou partie des additifs et agents de mise en œuvre usuels, connus de l'homme de l'art et habituellement utilisés dans les compositions de caoutchouc pour bandages pneumatiques ou non pneumatiques, en particulier pour bandes de roulement, comme par exemple, des charges (renforçantes ou non renforçantes / autres que celles précitées), des pigments, des agents de protection tels que cires anti-ozone, anti-ozonants chimiques, antioxydants, des agents anti-fatigue, des résines renforçantes (telles que décrites par exemple dans la demande WO 02/10269).

### Système de vulcanisation au soufre

Le mélange de caoutchouc conforme à l'invention comprend au moins un système de vulcanisation au soufre, ce système de vulcanisation comprend au moins un accélérateur de vulcanisation A choisi dans le groupe constitué par les thiurames, les dithiocarbamates, les dithiophosphates, les xanthates et leurs mélanges.

Le soufre peut être sous la forme de soufre moléculaire et/ou d'agent donneur de soufre. A titre d'exemple d'agent donneur de soufre, on peut citer notamment le soufre polymérique ou le disulfure de caprolactame.

Avantageusement, le taux de soufre dans le mélange de caoutchouc de l'invention est compris dans un domaine allant de 0,5 à 12 pce, plus préférentiellement allant de 0,5 à 10 pce.

D'une manière générale, les accélérateurs de vulcanisation peuvent être classés en deux catégories, selon qu'ils permettent un déclenchement plus ou moins rapide de la vulcanisation. Ce déclenchement de la vulcanisation peut être représenté par la valeur dite « t0 » de l'accélérateur. On distingue ainsi les accélérateurs de vulcanisation présentant un temps de déclanchement de la vulcanisation « t0 » strictement inférieur à 3,0 minutes, de préférence inférieur ou égal à 2,5 minutes, aussi appelé ultra-accélérateur de vulcanisation, des accélérateurs de vulcanisation ayant un temps de déclanchement de la vulcanisation « t0 » supérieur ou égal à 3,0 minutes. Le terme ultra-accélérateur est donc connu pour désigner des accélérateurs de vulcanisation ayant un « t0 » plus court qu'un accélérateur de vulcanisation classique, c'est-à-dire ici un « t0 » strictement inférieur à 3,0 minutes.

La valeur de « t0 » pour un accélérateur donné doit être mesurée dans une composition de caoutchouc donnée, à une température de vulcanisation donnée. Afin de comparer les accélérateurs dits lents ou rapides selon leur valeur de « t0 », on se donne ici comme composition de référence une composition comprenant 100 pce de NR, 47 pce de noir de carbone N326, 0,9 pce d'acide stéarique, 7,5 pce de ZnO, 4,5 pce de soufre, et l'accélérateur dont le « t0 » est à déterminer, à un taux molaire de 2,3 mmol pour 100 parties en poids d'élastomère. La méthode de mesure du « t0 » est conforme à la norme DIN-53529, à 150°C. Au sens de la présente demande, le « t0 » signifie le t0 tel que défini et mesuré ci-dessus.

Par exemple, le tableau n°1 ci-dessous donne le « t0 » de certains accélérateurs de vulcanisation mesuré avec la méthode de mesure proposée.

**[Table 1]**

| | CBS⁽¹⁾ | TBzTD⁽²⁾ |
|---|---|---|
| masse molaire (g/mol) | 264,41 | 544,42 |
| « t0 » en min | 3,0 | 1,5 |

| | | |
|---|---|---|
| **(1)** N-cyclohexyl-2-benzothiazol-sulfénamide (CBS) commercialisée par Quimica sous la référence « Rubenamid-C », **(2)** Disulfure de tetrabenzylthiurame (TBzTD) commercialisé par la société Harwick sous la référence « Ekaland TBZTD C ». Cet accélérateur de vulcanisation est classé dans les ultra-accélérateurs de vulcanisation. | | |

L'(ultra-)accélérateur de vulcanisation A utilisable dans le cadre des mélanges de la présente invention est choisi dans le groupe constitué par les thiurames, les dithiocarbamates, les dithiophosphates, les xanthates et leurs mélanges. L'homme du métier comprend bien que ces accélérateurs du type thiurames, dithiocarbamates, dithiophosphates, xanthates et leurs mélanges sont des accélérateurs du type thiurames, dithiocarbamates, dithiophosphates, xanthates et leurs mélanges, et présente un temps de déclenchement de la vulcanisation, dit « t0 », strictement inférieur à 3,0 minutes, de préférence inférieur ou égal à 2,5 minutes.

De manière particulièrement avantageuse, l'(ultra-)accélérateur de vulcanisation A peut être choisi dans le groupe constitué par le disulfure de tetrabenzylthiurame (TBzTD), le monosulfure de tétraméthyl thiurame (TMTM), le disulfure de tétraméthyl thiurame (TMTD), le disulfure de tétraéthyl thiurame (TETD), le disulfure de tétra isobutyl thiurame (TiBTD), le tétrasulfure de dipentaméthylène thiurame (DPTT), le dibutyl dithiocarbamate de zinc (ZDBC), le diéthyl dithiocarbamate de zinc, le diméthyl dithiocarbamate de zinc, le diméthyl dithiocarbamate de cuivre, le diéthylditiocarbamate de tellure (TDEC), le di-isononyldithiocarbamate de zinc, le pentaméthylène dithiocarbamate de zinc, le dibenzyldithiocarbamate de zinc (ZBEC), l'iso-propyl xanthate de zinc (ZIX), le butyle xanthate de zinc (ZBX), l'éthyle xanthate de sodium (SEX), l'iso-butyle xanthate de sodium, (SIBX), l'iso-propyle xanthate de sodium (SIPX), le n-butyl xanthate de sodium (SNBX), l'amyle xanthate de sodium (SAX), l'éthyle xanthate de potassium (PEX), l'amyle xanthate de potassium (PAX), le 2-éthylhexylphosphorodithioate de zinc (ZDT/S), et les mélanges de ces composés.

Plus préférentiellement, l'(ultra-)accélérateur de vulcanisation A peut être choisi dans le groupe constitué par le disulfure de tetrabenzylthiurame (TBzTD), le monosulfure de tétraméthylthiurame (TMTM), le disulfure de tétraméthylthiurame (TMTD), le disulfure de tétraéthyl thiurame (TETD), le disulfure de tétra isobutylthiurame (TiBTD), le tétrasulfure de dipentaméthylène thiurame (DPTT), le dibutyl dithiocarbamate de zinc (ZDBC), le diéthyl dithiocarbamate de zinc, le diméthyl dithiocarbamate de zinc, le di-isononyl dithiocarbamate de zinc, le pentaméthylène dithiocarbamate de zinc, le dibenzyldithiocarbamate de zinc (ZBEC), et les mélanges de ces composés.

Plus préférentiellement encore, l'(ultra-)accélérateur de vulcanisation A peut être choisi dans le groupe constitué par le disulfure de tetrabenzylthiurame (TBzTD), le disulfure de tétraméthylthiurame (TMTD), le disulfure de tétraéthyl thiurame (TETD), le disulfure de tétra isobutylthiurame (TiBTD), le dibutyl dithiocarbamate de zinc (ZDBC), le dibenzyldithiocarbamate de zinc (ZBEC), et les mélanges de ces composés.

Le taux d'(ultra-)accélérateur de vulcanisation A, dans le mélange de caoutchouc de l'invention, peut être préférentiellement compris dans un domaine allant de 0,5 à 10 pce, de préférence, de 1,0 à 4,5 pce, encore plus préférentiellement allant de 1,0 à 3 pce.

De préférence, le rapport du taux de soufre exprimé en pce sur le taux d'(ultra-)accélérateur de vulcanisation A exprimé en pce est compris dans un domaine allant de 0,05 à 24, de préférence de 0,16 à 10.

A ce système de vulcanisation de base peuvent venir s'ajouter, incorporés au cours de la première phase non-productive et/ou au cours de la phase productive telles que décrites ultérieurement, divers accélérateurs secondaires ou activateurs de vulcanisation connus tels que les oxydes métalliques (typiquement oxyde de zinc), les dérivés de l'acide stéarique (typiquement l'acide stéarique) ou composés équivalents, dérivés guanidiques (en particulier diphénylguanidine), bien connus de l'homme du métier.

Le système de vulcanisation utilisable pour le mélange de caoutchouc de l'invention peut comprendre un taux d'oxyde métallique (de préférence d'oxyde de zinc) inférieur à 12 pce. De préférence, le taux d'oxyde métallique (de préférence d'oxyde de zinc) est compris dans un domaine allant de 0,5 à 10 pce, de préférence de 1,0 à 7 pce. Le taux de dérivé d'acide stéarique (c'est à dire d'acide stéarique ou d'un sel d'acide stéarique, préférentiellement d'acide stéarique) est de préférence inférieur à 10 pce. De préférence, le taux de dérivé d'acide stéarique (c'est à dire d'acide stéarique ou d'un sel d'acide stéarique, préférentiellement d'acide stéarique) est compris dans un domaine allant de 0,5 à 10 pce, plus préférentiellement de 1,0 à 5 pce.

Dans la présente, on entend par « dérivé d'acide stéarique », de l'acide stéarique ou un sel d'acide stéarique, tous deux étant bien connus de l'homme du métier. A titre d'exemple de sel d'acide stéarique utilisable dans le cadre de la présente invention, on peut citer notamment le stéarate de zinc ou de cadmium.

Préférentiellement, en plus du soufre de l'(ultra-)accélérateur de vulcanisation A, le système de vulcanisation peut comprendre de l'oxyde de zinc, le rapport du taux d'oxyde de zinc exprimé en pce sur le taux d'(ultra-) accélérateur de vulcanisation A exprimé en pce est compris dans un domaine allant de 0,05 à 20, plus préférentiellement allant de 0,22 à 7.

Est également décrit dans la présente, un mélange de caoutchouc selon l'invention, dans lequel le système de vulcanisation comprend du soufre à un taux compris dans un domaine allant de 0,5 à 10 pce, un (ultra-)accélérateur de vulcanisation A tel que défini-ci-dessus, y compris ces formes préférées, à un taux compris dans un domaine allant de 1 à 4,5 pce (plus préférentiellement de 1 à 3 pce, et de l'oxyde de zinc , à un taux le rapport du taux d'oxyde de zinc exprimé en pce sur le taux d'(ultra-) accélérateur de vulcanisation A exprimé en pce est compris dans un domaine allant de 0,05 à 20, plus préférentiellement allant de 0,22 à 7.

Avantageusement, le mélange de caoutchouc selon l'invention ne comprend pas d'accélérateur de vulcanisation, appelé dans la suite de la description accélérateur de vulcanisation B, présentant un « t0 » supérieur ou égal à 3,0 minutes ou en comprenant moins de 0,5 pce, de préférence en comprend moins de 0,1 pce.

Très préférentiellement, le mélange de caoutchouc ne comprend pas d'accélérateur de vulcanisation B.

L'accélérateur de vulcanisation B, c'est-à-dire présentant un « t0 » supérieur ou égal à 3,0 minutes, peut être par exemple choisi dans le groupe constitué par les accélérateurs du type thiazoles ainsi que leurs dérivés, des accélérateurs de types sulfénamides, les accélérateurs thiourées et leurs mélanges. Par exemple, l'accélérateur de vulcanisation présentant un « t0 » supérieur ou égal à 3,0 minutes peut être choisi dans le groupe comprenant ou constitué par le disulfure de 2-mercaptobenzothiazyle (MBTS), le N-cyclohexyl-2-benzothiazyle sulfénamide (CBS), le N,N'-dicyclohexyl-2-benzothiazylesulfénamide (DCBS), le N-ter-butyl-2-benzothiazyle sulfénamide (TBBS), le N-ter-butyl-2-benzothiazyle sulfénimide (TBSI), le disulfure de morpholine, le N-morpholino-2-benzothiazyle sulfénamide (MBS), le dibutylthiourée (DBTU) et les mélanges de ces composés.

Selon ce mode de réalisation, le système de vulcanisation au soufre pour le mélange de caoutchouc de l'invention comprend au moins un accélérateur de vulcanisation A choisi dans le groupe constitué par les thiurames, les dithiocarbamates, les dithiophosphates, les xanthates et leurs mélanges, plus préférentiellement dans le groupes constitué les thiurames, les dithiocarbamates et leurs mélanges et au moins un accélérateur de vulcanisation B à un taux inférieur ou égal à 0,5 pce, plus préférentiellement inférieur à 0,1 pce ; l'accélérateur de vulcanisation B étant choisi dans le groupe constitué par les thiazoles les sulfénamides, les thiourées et leurs mélange .

### Composition de caoutchouc C1

Le mélange de caoutchouc selon l'invention comprend au moins une composition de caoutchouc, notée C1, ayant une température de transition vitreuse définie noté Tg1.

Cette composition de caoutchouc C1 comprend au moins un élastomère E1 tel que défini ci-dessus ; étant entendu que l'élastomère E1 est de nature chimique différente de l'élastomère diénique E2. De préférence, l'élastomère E1 est un élastomère diénique, plus préférentiellement encore, est un élastomère diénique non-fonctionnalisé.

Plus préférentiellement encore, l'élastomère E1 de la composition de caoutchouc C1 est choisi dans le groupe constitué par les polybutadiènes, les copolymères de butadiène et de styrène, les copolymères de butadiène et d'isoprène, les copolymères d'isoprène et de styrène et les copolymères de butadiène-styrène-isoprène. Préférentiellement, l'élastomère E1 de la composition de caoutchouc C1 est choisi dans le groupe constitué par les polybutadiènes et les copolymères de butadiène et de styrène. Plus préférentiellement, l'élastomère E1 de la composition de caoutchouc C1 est un copolymère de styrène et de butadiène.

Préférentiellement, cet élastomère E1 est un élastomère diénique non-fonctionnalisé. Par « un élastomère diénique non-fonctionnalisé », on entend au sens de la présente invention un élastomère diénique, qu'il soit naturel ou synthétique, qui n'est pas porteur d'une fonction chimique apte à interagir avec une charge renforçante. Préférentiellement, l'élastomère diénique non fonctionnalisé peut consister essentiellement en des atomes de carbone et d'hydrogène. Il peut ne pas comprendre d'hétéroatomes ou alors dans des quantités qui sont des impuretés et qui résultent de son procédé de synthèse.

Préférentiellement, l'élastomère diénique E1, de préférence un copolymère de styrène-butadiène, est non-fonctionnalisé et présente une température de transition vitreuse TgE1 supérieure ou égale à -50°C. Plus préférentiellement, la température de transition vitreuse TgE1 est comprise dans un domaine allant de -50°C à 0°C, plus préférentiellement de -40°C à 0°C, plus préférentiellement de -30°C à 0°C.

Dans un mode de réalisation, la composition de caoutchouc C1 peut comprendre, en outre, au moins une charge renforçante. La charge renforçante peut être tout type de charge renforçante telle que décrite ci-dessus. Préférentiellement, la charge renforçante est choisie dans le groupe constitué par un noir de carbone, une charge renforçante inorganique et leurs mélanges. Plus préférentiellement encore, la charge renforçante est choisi dans le groupe constitué par un noir de carbone, une silice et leurs mélanges. Dans ce mode de réalisation, le taux de la charge renforçante dans la composition C1 est inférieur au taux de la charge renforçante dans la composition C2.

La composition de caoutchouc C1 peut également comprendre au moins un plastifiant tel que décrit ci-dessus ou tout autre additif décrit ci-dessus.

### Composition de caoutchouc C2

Le mélange de caoutchouc selon l'invention comprend au moins une composition de caoutchouc, notée C2, ayant une température de transition vitreuse définie noté Tg2.

Cette composition de caoutchouc C2 comprend au moins un élastomère diénique E2 qui est un élastomère isoprénique.

Par « élastomère isoprénique », on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR).

L'élastomère diénique isoprénique E2 est de préférence du caoutchouc naturel ou un polyisoprène cis-1,4 de synthèse. Parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Avantageusement, la température de transition vitreuse TgE2 de l'élastomère E2, de préférence diénique notamment fonctionnalisé, est comprise dans un domaine allant de -110°C à -23°C, de préférence allant de -100°C à -28°C, plus préférentiellement allant de -95°C à -30°C.

La composition de caoutchouc C2 comprend, en outre, au moins une charge renforçante. La charge renforçante peut être tout type de charge renforçante telle que décrite ci-dessus. Préférentiellement, la charge renforçante de la composition C2 comprend majoritairement au moins une charge renforçante inorganique, plus préférentiellement comprend majoritairement au moins une silice.

La composition de caoutchouc C2 peut également comprendre au moins un plastifiant tel que décrit ci-dessus ou tout autre additif décrit ci-dessus.

### Mélange de caoutchouc selon l'invention et son procédé de fabrication

Comme vu précédemment, le mélange de caoutchouc conforme à l'invention présente au moins deux températures vitreuse Tg1 et Tg2 et résulte de la combinaison spécifique d'un système de vulcanisation au soufre et d'au moins deux compositions de caoutchouc C1 et C2 sélectionnées de telle manière que :
- la température de transition vitreuse Tg1 de la composition C1 est supérieure ou égale à -50°C,
- le mélange de caoutchouc satisfait la relation mathématiqueTg1 -Tg2 ≥ 23°C,
- le mélange de caoutchouc a un profil de facteur de perte présentant l'évolution de tan δ en fonction de la température en °C, le profil de facteur de perte étant mesuré sur un intervalle de température allant de -80°C à 60 °C à une fréquence de 10 Hz et à une contrainte constante de 0,7 MPa et présentant un ou plusieurs pics, ce profil étant tel que tous les pics de tan δ (tan delta) présents à une température supérieure à la température de transition vitreuse Tg1, présentent une largeur à mi-hauteur inférieure ou égale à 23°C ; et
- l'élastomère E1 est majoritaire dans le mélange de caoutchouc,
- l'élastomère E2 est un élastomère diénique isoprénique ; et
- le système de vulcanisation au soufre comprend au moins un accélérateur de vulcanisation A choisi le groupe constitué par les thiurames, les dithiocarbamates, les dithiophosphates, les xanthates et leurs mélanges .

De manière surprenante, cette combinaison spécifique de compositions de caoutchouc dont le système de vulcanisation comprend au moins un accélérateur de vulcanisation A choisi le groupe constitué par les thiurames, les dithiocarbamates, les dithiophosphates, les xanthates et leurs mélanges permet d'obtenir un mélange de caoutchouc présentant simultanément des propriétés d'hystérèse et une bonne adhérence sur sol mouillé améliorées. Sans être lié par une théorie, si le mélange de caoutchouc présente une différence de températures de transition vitreuse inférieure à 23°C, alors les propriétés d'hystérèse sont détériorées et le mélange de caoutchouc ne présente pas une bonne résistance au roulement. Si le mélange de caoutchouc a un profil de facteur de perte présentant l'évolution de tan δ en fonction de la température en °C, le profil de facteur de perte étant mesuré sur un intervalle de température allant de -80°C à 60 °C à une fréquence de 10 Hz et à une contrainte constante de 0,7 MPa et présentant un ou plusieurs pics, ce profil étant tel que tous les pics de tan δ (tan delta) présents à une température supérieure à la température de transition vitreuse Tg1, présentent une largeur à mi-hauteur supérieur à 23°C, alors le mélange de caoutchouc présente un mauvais coefficient de frottement dynamique, donc des propriétés d'adhérence sur sol mouillé détériorées. La présence du système de vulcanisation spécifique tel que mentionné ci-dessus permet d'améliorer ces propriétés lorsque l'élastomère E2 est un élastomère diénique isoprénique, de préférence le caoutchouc naturel.

Préférentiellement, le mélange de caoutchouc satisfait la relation mathématiqueTg1 -Tg2 ≥ 25°C, de préférence Tg1 -Tg2 ≥ 28°C.

Avantageusement, le mélange de caoutchouc satisfait la relation mathématique 25°C ≤Tg1 - Tg2 ≤ 40°C.

Préférentiellement, la température de transition vitreuse Tg1 de la composition de caoutchouc C1 est supérieure ou égale à -48°C, de préférence supérieure ou égale à -40°C.

Préférentiellement, la température de transition vitreuse Tg1 de la composition de caoutchouc C1 est comprise dans un domaine allant de -48°C à -15°C, de préférence comprise dans un domaine allant de -40°C à -15°C.

Préférentiellement, la température de transition vitreuse Tg2 de la composition C2 est inférieure ou égale à -43°C, de préférence inférieure ou égale à -50°C.

Préférentiellement, la température de transition vitreuse Tg2 de la composition C2 est comprise dans un domaine allant de -90°C à -43°C, de préférence allant de -85°C à -50°C.

Préférentiellement, le mélange de caoutchouc selon l'invention est à base d'au moins un système de vulcanisation au soufre et d'au moins une composition de caoutchouc C1 de température transition vitreuse Tg1 et comprenant un élastomère E1 diénique non-fonctionnalisé, plus préférentiellement encore un copolymère de styrène et de butadiène , et la température de transition vitreuse Tg1 étant comprise dans un domaine allant de -48°C à -15°C et une composition de caoutchouc C2 de température de transition vitreuse Tg2 et comprenant un élastomère E2 diénique isoprénique, de préférence le caoutchouc naturel, et la température de transition vitreuse Tg2 étant comprise dans un domaine allant de -90°C à -43°C ; le mélange de caoutchouc satisfait la relation mathématique Tg1 -Tg2 ≥ 28°C, le mélange de caoutchouc ayant un profil de facteur de perte présentant l'évolution de tan δ en fonction de la température en °C, le profil de facteur de perte étant mesuré sur un intervalle de température allant de -80°C à 60 °C à une fréquence de 10 Hz et à une contrainte constante de 0,7 MPa et présentant un ou plusieurs pics, ce profil étant tel que tous les pics de tan δ présents à une température supérieure à la température de transition vitreuse Tg1, présentent une largeur à mi-hauteur inférieure ou égale à 23°C, l'élastomère E1 étant majoritaire dans le mélange de caoutchouc et le système de vulcanisation au soufre comprenant au moins un accélérateur de vulcanisation A choisi le groupe constitué par les thiurames, les dithiocarbamates, les dithiophosphates, les xanthates et leurs mélanges, plus préférentiellement au moins un accélérateur de vulcanisation A choisi le groupe constitué par les thiurames, les dithiocarbamates et leurs mélanges.

Préférentiellement, le mélange de caoutchouc selon l'invention est à base d'au moins un système de vulcanisation au soufre et d'au moins une composition de caoutchouc C1 de température transition vitreuse Tg1 et comprenant un élastomère E1 diénique non-fonctionnalisé, plus préférentiellement encore un copolymère de styrène et de butadiène, et la température de transition vitreuse Tg1 étant comprise dans un domaine allant de -40°C à -15°C et une composition de caoutchouc C2 de température de transition vitreuse Tg2 et comprenant un élastomère E2 diénique isoprénique, de préférence le caoutchouc naturel, et la température de transition vitreuse Tg2 étant comprise dans un domaine allant de -85°C à -50°C, le mélange de caoutchouc satisfait la relation mathématique Tg1 -Tg2 ≥ 28°C, le mélange de caoutchouc ayant un profil de facteur de perte présentant l'évolution de tan δ en fonction de la température en °C, le profil de facteur de perte étant mesuré sur un intervalle de température allant de -80°C à 60 °C à une fréquence de 10 Hz et à une contrainte constante de 0,7 MPa et présentant un ou plusieurs pics, ce profil étant tel que tous les pics de tan δ présents à une température supérieure à la température de transition vitreuse Tg1, présentent une largeur à mi-hauteur inférieure ou égale à 23°C, l'élastomère E1 étant majoritaire dans le mélange de caoutchouc et le système de vulcanisation au soufre comprenant au moins un accélérateur de vulcanisation A choisi le groupe constitué par les thiurames, les dithiocarbamates, les dithiophosphates, les xanthates et leurs mélanges, plus préférentiellement au moins un accélérateur de vulcanisation A choisi le groupe constitué par les thiurames, les dithiocarbamates et leurs mélanges.

Préférentiellement, le taux de l'élastomère E1, de préférence diénique, notamment non-fonctionnalisé, plus préférentiellement encore un copolymère de styrène et de butadiène, dans le mélange de caoutchouc de l'invention est compris dans un domaine allant de 50 pce à 70 pce, de préférence de 55 pce à 70 pce, plus préférentiellement de 55 pce à 65 pce.

Préférentiellement, le taux de l'élastomère E2 diénique isoprénique, de préférence le caoutchouc naturel, dans le mélange de caoutchouc de l'invention est inférieur ou égal à 40 pce, plus préférentiellement est compris dans un domaine allant 30 pce à 50 pce, de préférence de 30 pce à 45 pce, plus préférentiellement de 35 pce à 45 pce.

Avantageusement, le taux de l'élastomère E1, de préférence diénique, notamment non-fonctionnalisé, plus préférentiellement encore un copolymère de styrène et de butadiène, dans le mélange de caoutchouc de l'invention est compris dans un domaine allant 50 pce à 70 pce et le taux de l'élastomère E2 diénique isoprénique, de préférence le caoutchouc naturel, dans le mélange de caoutchouc de l'invention est compris dans un domaine allant 30 pce à 50 pce. Avantageusement, le taux de l'élastomère E1, de préférence diénique, notamment non-fonctionnalisé, plus préférentiellement encore un copolymère de styrène et de butadiène, dans le mélange de caoutchouc de l'invention est compris dans un domaine allant 55 pce à 70 pce et le taux de l'élastomère E2 diénique isoprénique, de préférence le caoutchouc naturel, dans le mélange de caoutchouc de l'invention est compris dans un domaine allant 30 pce à 45 pce.

De préférence, le taux de charge renforçante dans le mélange de caoutchouc de l'invention est compris dans un domaine allant de 20 à 100 pce, plus préférentiellement de 30 à 90 pce, et encore plus préférentiellement de 40 à 90 pce ; l'optimum étant de manière connue différent selon les applications particulières visées.

Lorsque la charge renforçante est une charge inorganique renforçante comme une silice par exemple, il peut être avantageux d'utiliser un agent de couplage. Préférentiellement, la teneur en agent de couplage dans le mélange de caoutchouc de l'invention est avantageusement inférieure ou égale à 20 pce, étant entendu qu'il est en général souhaitable d'en utiliser le moins possible. Typiquement le taux d'agent de couplage représente de 0,5 % à 15 % en poids par rapport à la quantité de charge inorganique renforçante. Son taux est préférentiellement compris dans un domaine allant de 0,5 à 20 pce. Ce taux est aisément ajusté par l'homme du métier selon le taux de charge inorganique renforçante utilisé dans la composition de l'invention.

Selon une mode de réalisation préférée, la charge renforçante est majoritairement une charge renforçante inorganique (de préférence de la silice) dans le mélange de caoutchouc selon l'invention, c'est-à-dire que la charge renforçante comprend plus de 50 % (>50%) en poids d'une charge renforçante inorganique telle que de la silice par rapport au poids total de la charge renforçante dans le mélange de caoutchouc. Optionnellement selon ce mode de réalisation, la charge renforçante peut comprendre également du noir de carbone. Selon cette option, le noir de carbone est utilisé à un taux inférieur ou égal à 20 pce dans le mélange de caoutchouc, plus préférentiellement inférieur ou égal à 10 pce (par exemple le taux de noir de carbone peut être compris dans un domaine allant de 0,5 à 20 pce, notamment allant de 1 à 10 pce dans le mélange de caoutchouc). Dans les intervalles indiqués, on bénéficie des propriétés colorantes (agent de pigmentation noire) et anti-UV des noirs de carbone, sans pénaliser par ailleurs les performances typiques apportées par la charge inorganique renforçante.

### Procédé de fabrication du mélange de caoutchouc

Le mélange de caoutchouc de l'invention peut être obtenu par les procédés habituels de fabrications de mélanges de caoutchouc tel que le mélangeage à sec des différents ingrédients.

Selon un mode de réalisation, le mélange de caoutchouc conforme à l'invention est fabriqué dans des mélangeurs appropriés, en utilisant deux phases de préparation successives bien connues de l'homme du métier :
- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type « Banbury »), dans l'ordre séquentiel suivant, l'élastomère diénique isoprénique E2 de la composition de caoutchouc de température de transition vitreuse Tg2, la charge renforçante et éventuellement l'agent de couplage de la charge renforçante. Après un malaxage thermomécanique au cours duquel ces ingrédients sont maintenus à une température comprise dans un domaine allant de 140°C à 200°C pendant une à deux minutes, on introduit dans le mélangeur interne l'élastomère E1 de la composition de caoutchouc de température de transition vitreuse Tg1, ainsi que tous les constituants nécessaires, à l'exception du système de vulcanisation. Ces ingrédients subissent un malaxage thermomécanique pendant 2 à 10 minutes jusqu'à une température maximale comprise dans un domaine allant de 110°C à 200°C, de préférence allant de 130°C à 185°C (et dite « température de tombée ») ;
- une seconde phase de travail mécanique (phase dite « productive »), est réalisée dans un mélangeur externe tel qu'un mélangeur à cylindres, après refroidissement du mélange obtenu au cours de la première phase non-productive jusqu'à une plus basse température, typiquement inférieure à 120°C, par exemple dans un domaine allant de 40°C à 100°C. On incorpore alors le système de vulcanisation comprenant au moins un accélérateur de vulcanisation A choisi le groupe constitué par les thiurames, les dithiocarbamates, les dithiophosphates, les xanthates et leurs mélanges, plus préférentiellement au moins un accélérateur de vulcanisation A choisi le groupe constitué par les thiurames, les dithiocarbamates et leurs mélanges, en mélangeant pendant 5 à 15 min, pour obtenir le mélange de caoutchouc de l'invention.

Selon un autre mode préféré de réalisation de l'invention, le mélange de caoutchouc de l'invention est préparé sous forme de deux compositions de caoutchouc, puis les compositions de caoutchouc sont combinées de manière à obtenir le mélange de caoutchouc selon l'invention.

Plus précisément, selon ce mode de réalisation, le mélange de caoutchouc tel que défini ci-dessus et ses modes de réalisation préférentiels peut être obtenu selon le procédé de fabrication comprenant les étapes suivantes :
- préparer la composition de caoutchouc C1 dans un mélangeur interne en introduisant l'élastomère E1 de la composition de caoutchouc C1 et le cas échéant les autres ingrédients tels qu'un plastifiant et conduire un travail thermomécanique jusqu'à une température maximale de 200°C pour obtenir la composition de caoutchouc C1 ;
- préparer la composition de caoutchouc C2 dans un mélangeur interne en introduisant l'élastomère diénique isoprénique E2 de la composition de caoutchouc C2, la charge renforçante le cas échéant les autres ingrédients tels qu'un plastifiant ou un agent de couplage de la charge renforçante, et conduire un travail thermomécanique jusqu'à une température maximale de 200°C pour obtenir la composition de caoutchouc C2;
- introduire dans un mélangeur interne les compositions de caoutchouc C1 et C2 obtenues aux étapes précédentes et conduire un travail thermomécanique jusqu'à une température maximale de 180°C pour obtenir une combinaison de compositions ;
- récupérer la combinaison de compositions de l'étape précédente et la refroidir à une température inférieure ou égale à 110°C ;
- incorporer dans la combinaison de compositions refroidie le système de vulcanisation comprenant au moins un accélérateur de vulcanisation A choisi le groupe constitué par les thiurames, les dithiocarbamates, les dithiophosphates, les xanthates et leurs mélanges, plus préférentiellement au moins un accélérateur de vulcanisation A choisi le groupe constitué par les thiurames, les dithiocarbamates et leurs mélanges, et malaxer l'ensemble jusqu'à une température maximale inférieure à 110°C, préférentiellement inférieure à 80°C, et récupérer le mélange de caoutchouc.

Plus précisément, on prépare la première composition de caoutchouc, dite composition C1, en mélangeant dans un mélangeur approprié tel qu'un mélangeur interne usuel (par exemple de type « Banbury ») l'élastomère E1 et les autres constituants éventuels de la composition C1 tels que le ou les plastifiants, les anti-ozonant, etc à l'exception du système de vulcanisation. Un travail thermomécanique est conduit pendant 2 à 10 minutes jusqu'à une température maximale comprise dans un domaine allant de 110°C à 200°C, de préférence allant de 130°C à 185°C (dite « température de tombée »). On récupère ainsi la composition de caoutchouc C1.

On prépare ensuite la deuxième composition de caoutchouc, dite composition C2, en mélangeant dans un mélangeur approprié tel qu'un mélangeur interne usuel (par exemple de type « Banbury ») l'élastomère diénique isoprénique E2, la charge renforçante et les autres constituants éventuels tels que le ou les plastifiants et l'agent de couplage de la charge renforçante, les anti-ozonant, etc à l'exception du système de vulcanisation. Un travail thermomécanique est conduit pendant une durée 2 à 10 minutes jusqu'à une température maximale comprise dans un domaine allant de 140°C à 200°C, de préférence allant de 140°C à 185°C (et dite « température de tombée »). On récupère ainsi la composition de caoutchouc C2.

On introduit dans un mélangeur interne usuel (par exemple de type « Banbury »), les deux compositions de caoutchouc C1 et C2 des étapes précédentes et on conduit un travail thermomécanique pendant 2 à 10 minutes jusqu'à une température maximale comprise dans un domaine allant de 110°C à 180°C, de préférence allant de 130°C à 180°C (et dite « température de tombée »).

Le mélange de l'étape précédente est ensuite refroidi sur un mélangeur externe tel qu'un mélangeur à cylindres jusqu'à une température inférieure ou égale à 110°C. On incorpore alors le système de vulcanisation comprenant au moins un accélérateur de vulcanisation A choisi le groupe constitué par les thiurames, les dithiocarbamates, les dithiophosphates, les xanthates et leurs mélanges, plus préférentiellement au moins un accélérateur de vulcanisation A choisi le groupe constitué par les thiurames, les dithiocarbamates et leurs mélanges, par mélangeage pendant 5 à 15 min, et, et on récupère le mélange de caoutchouc selon l'invention.

Quel que soit le mode de préparation du mélange de caoutchouc, le mélange de caoutchouc final ainsi obtenu est ensuite calandré par exemple sous la forme d'une feuille ou d'une plaque, notamment pour une caractérisation au laboratoire, ou encore extrudée sous la forme d'un semi-fini (ou profilé) de caoutchouc utilisable par exemple comme une bande de roulement d'un bandage pneumatique ou non pneumatique notamment pour véhicule tourisme.

Le mélange de caoutchouc peut être soit à l'état cru (avant vulcanisation), soit à l'état cuit (après vulcanisation), peut être un produit semi-fini qui peut être utilisé dans un bandage pneumatique ou non pneumatique.

La vulcanisation du mélange de caoutchouc peut être conduite de manière connue de l'homme du métier, par exemple à une température comprise dans un domaine allant de 130°C à 200°C, sous pression.

### Autres objets de l'invention

Un autre objet de la présente invention est une bande de roulement de bandage pneumatique ou non pneumatique comprenant au moins un mélange de caoutchouc défini ci-dessus. Le mélange de caoutchouc selon l'invention peut constituer toute la bande de roulement ou bien une partie de la bande de roulement.

Un autre objet de la présente invention concerne un bandage pneumatique ou bandage non pneumatique comprenant au moins un mélange de caoutchouc défini ci-dessus ou au moins une bande de roulement définie ci-dessus.

Par « bandage pneumatique », on entend un bandage destiné à former une cavité en coopérant avec un élément support, par exemple une jante, cette cavité étant apte à être pressurisée à une pression supérieure à la pression atmosphérique. Par opposition, un « bandage non pneumatique » n'est pas apte à être pressurisé. Ainsi un bandage non pneumatique est un corps torique constitué par au moins un matériau polymérique, destiné à assurer la fonction d'un pneumatique mais sans être soumis à une pression de gonflage. Un bandage non pneumatique peut être plein ou creux. Un bandage non pneumatique creux peut contenir de l'air, mais à la pression atmosphérique, c'est-à-dire qu'il n'a pas de rigidité pneumatique apportée par un gaz de gonflage à une pression supérieure à la pression atmosphérique.

Les bandages pneumatiques selon l'invention sont destinés à équiper notamment des véhicules de tout type tels que les véhicules de tourisme, les véhicules à deux roues, les véhicules poids lourds, les véhicules agricoles, les véhicules de génie civil ou des avions ou, plus généralement, sur tout dispositif roulant. Les bandages non pneumatiques sont destinés à équiper notamment des véhicules de tourisme ou des deux roues. De manière préférée, les bandages pneumatiques selon l'invention sont destinés à équiper les véhicules tourisme.

Préférentiellement, le bandage pneumatique ou le bandage non pneumatique comprend au moins une bande de roulement comprenant au moins un mélange de caoutchouc défini ci-dessus.

### METHODES DE MESURES

### Détermination de la température de transition vitreuse des élastomères

Les températures de transitions vitreuses (Tg) des élastomères, avant leur utilisation, sont déterminées à l'aide d'un calorimètre différentiel (« différential scanning calorimeter ») selon la norme ASTM D3418 : 2008.

### Détermination de la température de transition vitreuse du mélange de caoutchouc

La température de transition vitreuse mélange du mélange de caoutchouc est mesurée selon la norme NF EN ISO 11357-2 :05-2014 à l'aide d'un appareil DSC3+ Mettler Toledo et de creusets en aluminium de 40 µl.

Les mesures de balayage s'effectuent de la manière suivante sous hélium à un débit de 40 ml/min :
- Echantillon porté de +25°C à -150°C avec une rampe de 50°C/min ;
- Isotherme à -150°C pendant 5 min ;
- Chauffage de -150°C à +200°C avec une rampe de 20°C/min
- Isotherme à +200°C pendant 5 min ;
- Refroidissement de +200°C à -150°C avec une rampe de 20°C/min
- Isotherme à -150°C pendant 5 min ;
- Chauffage de -150°C à +200°C avec une rampe de 20°C/min

### Détermination du coefficient µₘₐₓ

Les mesures de coefficient de frottement dynamique ont été réalisées selon une méthode identique à celle décrite par L. Busse, A. Le Gal, et M. Küppel (Modelling of Dry and Wet Friction of Silica Filled Elastomers on Self-Affine Road Surfaces, Elastomere Friction, 2010, 51, p. 8). Les éprouvettes sont réalisées par moulage, puis vulcanisation d'un support caoutchouteux carré (50mmx50mm) de 6 mm d'épaisseur. Après fermeture du moule, celui-ci est placé dans une presse à plateaux chauffants à la température de 150°C, et pendant le temps nécessaire à la vulcanisation du matériau (typiquement plusieurs dizaines de minutes), à une pression de 16 bars. Le sol utilisé pour réaliser ces mesures est une carotte prélevée sur un sol routier réel en béton bitumineux de type BBTM (norme NF P 98-137). Pour éviter les phénomènes de démouillage et l'apparition de forces d'adhésion parasites entre le sol et le matériau, le système sol + éprouvette est immergé dans une solution aqueuse à 5 % d'un agent tensio-actif (Sinnozon - numéro CAS : 25155-30-0). La température de la solution aqueuse est régulée à l'aide d'un bain thermostatique. L'éprouvette est soumise à un mouvement de glissement en translation parallèlement au plan du sol. La vitesse de glissement Vg est fixée à 1,2 m/s. La contrainte normale appliquée σₙ est de 400 kPa (soit 4 bars). Ces conditions sont décrites ci-après par « conditions de sol mouillé ». On mesure en continu la contrainte tangentielle σₜ opposée au mouvement de l'éprouvette sur le sol. Le rapport entre la contrainte tangentielle σₜ et la contrainte normale σₙ donne le coefficient de frottement dynamique µ. Les valeurs de coefficient de frottement dynamique sont mesurées lors d'un balayage en température de la solution aqueuse, allant de 3°C à 44°C, sont obtenues en régime permanent après stabilisation de la valeur de la contrainte tangentielle σₜ.

Dans les exemples, on indique la valeur maximale du coefficient de frottement dynamique (noté µₘₐₓ) mesurée lors de ce balayage.

Sauf indication contraire, les résultats sont indiqués en base 100. La valeur arbitraire 100 étant attribuée au mélange comparatif pour calculer et comparer ensuite le coefficient de frottement dynamique maximal des différents échantillons testés. La valeur en base 100 pour l'échantillon à tester est calculée selon l'opération : (valeur de µₘₐₓ de l'échantillon à tester / valeur du µₘₐₓ mélange comparatif) × 100. De cette façon, un résultat inférieur à 100 indiquera une diminution du coefficient µₘₐₓ et donc une baisse de la performance d'adhérence sur sol mouillé. Inversement, un résultat supérieur à 100 indiquera une augmentation du coefficient µₘₐₓ et donc une augmentation de la performance d'adhérence sur sol mouillé.

### Mesure des propriétés dynamiques après cuisson.

Les propriétés dynamiques tan(δ) sont mesurées sur un viscoanalyseur (Metravib V A4000), selon la norme ASTM D 5992 - 96. On enregistre la réponse d'un échantillon du mélange vulcanisé (2 éprouvettes cylindriques de 2 mm d'épaisseur et de 78,5 mm² de section), soumis à une sollicitation sinusoïdale en cisaillement simple alterné, à la fréquence de 10 Hz et à une température de 23°C. On effectue un balayage en amplitude de déformation crête à crête de 1 à 100% (cycle aller), puis de 100% à 1 % (cycle retour). Les résultats exploités sont le facteur de perte (tan δ). Pour le cycle retour, on indique la valeur maximale de tan δ observée à 23°C (tanδmax) noté tan δ_{max à 23°C}

Pour tan δ_{max à 23°C}, les résultats sont exprimés en performance base 100, c'est-à-dire qu'on affecte arbitrairement la valeur 100 au mélange comparatif, pour calculer et comparer ensuite le tan δ ₘₐₓ à _{23°C} des différentes mélange testés. La valeur en base 100 est calculée selon l'opération : (valeur de tan δₘₐₓ à _{23°C} du mélange comparatif / valeur de tan δₘₐₓ à _{23°C} de l'échantillon) * 100. De cette façon, une valeur plus basse représente une diminution des propriétés d'hystérèse tandis qu'une valeur plus élevée représente une amélioration des propriétés d'hystérèse, donc une amélioration de la résistance au roulement.

On rappelle, de manière bien connue de l'homme du métier, que la valeur de tan δ à 0°C représentative du potentiel d'adhérence sur sol mouillé. Pour cela, on soumet également le même échantillon, à une sollicitation sinusoïdale en cisaillement simple alterné, à la fréquence de 10 Hz, lors d'un balayage en température -80°C à +100°C, sous une contrainte fixe de 0,7 MPa. On relève la valeur tan δ à 0°C (tan δ _{à 0°C}). Plus tan δ_{à 0°C} est élevée, meilleure est l'adhérence. Les résultats sont exprimés en performance base 100, c'est-à-dire qu'on affecte arbitrairement la valeur 100 au mélange comparatif, pour calculer et comparer ensuite le tan δ _{à 0°C} des différentes mélange testés. La valeur en base 100 est calculée selon l'opération : (valeur de tan δ _{à 0°C} du mélange comparatif / valeur de tan δ _{à 0°C} de l'échantillon) * 100.

### Mesure du profil du facteur de perte mesuré selon ASTM D 5992 - 96

On enregistre la réponse d'une éprouvette constituée de deux pastilles cylindriques de 2 mm d'épaisseur chacune 78,5 mm² de section et d'un centimètre de diamètre. L'éprouvette est soumise à une sollicitation sinusoïdale en cisaillement simple alterné, à la fréquence de 10 Hz, pendant un balayage de température de -80°C à + 100°C avec une rampe de +1,5°C/min sous une contrainte constante de 0,7 MPa. L'acquisition des données est faite à une fréquence 0,12 Hz qui pourra être adaptée pour obtenir la précision souhaitée.

On détermine ensuite, pour les pics de tan δ présents à une température supérieure à la température de transition vitreuse Tg1, la largeur du pic à mi-hauteur de chacun de ces pics.

Cette largeur à mi-hauteur est définie comme suit : soit un maximum donné se trouvant à une température T0 et ayant une valeur associée de tan δ Y. On relève alors l'ensemble des températures associées à des valeurs de tan δ égale à Y/2. Parmi ces valeurs, la largeur du pic à mi-hauteur correspond alors à l'écart en °C entre les deux plus proches températures encadrant T0 la température du maximum.

### EXEMPLES

### 1- Ingrédients :

Les ingrédients utilisés dans les exemples sont les suivants :
Elastomère (1A) : Copolymère styrène-butadiène, non fonctionnalisé, ayant une Tg de -28°C mesurée selon la norme ASTM D3418 :2008, un taux de styrène de 41 % en poids par rapport au poids total du copolymère, un taux de butadiène 1,2 vinyle de 14 % en poids par rapport au poids total du copolymère, un taux de butadiène 1,4-trans de 27 % en poids par rapport au poids total du copolymère.
Elastomère (1B) : Copolymère styrène-butadiène porteur d'une fonction amino-alcoxysilane en milieu de chaîne et ayant une Tg de -65°C mesurée selon la norme ASTM D3418 :2008, un taux de styrène de 16 % en poids par rapport au poids total du copolymère, un taux de butadiène 1,2 vinyle de 20 % en poids par rapport au poids total du copolymère, un taux de butadiène 1,4-trans de 39 % en poids par rapport au poids total du copolymère.
Elastomère (1C) : Caoutchouc naturel ayant une Tg de -70°C.
Silice (2) : Silice « Zeosil 1165MP » commercialisée par Solvay .
Silane (3) : Bis[3-(triéthoxysilyl)propyl] tétrasulfure silane (TESPT) commercialisé par Evonik sous la référence « Si69 ».
DPG (4) : Diphénylguanidine « Perkacit DPG » de la société Flexsys.
Plastifiant (5) : résine DCPD ayant un point de ramollissement de 100 °C, une température de transition vitreuse de 51°C commercialisée sous la référence « PR-383 » par Exxon Mobil.
ZnO (6) : Oxyde de Zinc (grade industriel) commercialisé par la société Umicore.
Acide stéarique (7) : Stéarine « Pristerene 4031 » commercialisée par la société Uniquema.
Cire anti-ozone (8) : Cire anti-ozone « VARAZON 4959 » de la société Sasol Wax
Anti-oxydant (9) : N-1,3-diméthylbutyl-N-phenyl-para-phénylènediamine commercialisé par Flexys sous la référence « Santoflex 6-PPD.

### 2. Essai 1 :

Cet essai a pour but de montrer l'amélioration de propriétés de caoutchouterie des mélanges selon l'invention (mélange de caoutchouc MI1 et MI2) par rapport à des mélanges de caoutchouc témoins (mélange de caoutchouc MT1 à MT4) en fonction du système de vulcanisation au soufre et de la formulation des mélanges.

Le mélange de caoutchouc comparatif MT1 est un mélange de caoutchouc complexe à base de deux compositions et comprenant un système de vulcanisation au soufre avec un accélérateur de vulcanisation classique.

Le mélange de caoutchouc comparatif MT2 se distingue du mélange de caoutchouc MT1 par son système de vulcanisation au soufre qui comprend un ultra-accélérateur de vulcanisation à la place de l'accélérateur classique.

Le mélange de caoutchouc comparatif MT3 se distingue du mélange de caoutchouc MT1 par la nature de l'élastomère utilisé dans la composition C2 de Tg2.

Le mélange de caoutchouc comparatif MT4 se distingue du mélange de caoutchouc MT3 par la nature de l'accélérateur de vulcanisation utilisé.

Le mélange de caoutchouc selon l'invention MI1 se distingue du mélange comparatif MT2 par la nature de l'élastomère utilisé dans la composition C2 de Tg2.

Le mélange de caoutchouc selon l'invention MI2 se distingue du mélange de caoutchouc selon l'invention MI1 par l'utilisation d'un ultra-accélérateur de vulcanisation de nature chimique différente.

La formulation des mélanges comparatif MT1 à MT4 et ceux de l'invention MI1 et MI2 sont présentés dans le tableau n°2 et n°3 ; les proportions sont exprimées en pce c'est-à-dire en partie en poids pour 100 parties en poids des élastomères du mélange.

**[Table 2]**

| | MT1 | MT2 |
|---|---|---|
| Elastomère (1A) | 60,0 | 60,0 |
| Elastomère (1B) | 40,0 | 40,0 |
| Silice (3) | 55,0 | 55,0 |
| Silane (4) | 5,5 | 5,5 |
| DPG (5) | 1,2 | 1,2 |
| Plastifiant (6) | 18,4 | 18,4 |
| ZnO (9) | 5,0 | 5,0 |
| Acide stéarique (10) | 2,0 | 2,0 |
| Cire anti-ozone (7) | 2,0 | 2,0 |
| Anti-Oxydant (8) | 1,0 | 1,0 |
| Soufre | 0,5 | 0,5 |
| CBS | 2,0 | (-) |
| TBzTD | (-) | 5,0 |

**[Table3]**

| | MT3 | MT4 | MI1 | MI2 |
|---|---|---|---|---|
| Elastomère (1A) | 60,0 | 60,0 | 60,0 | 60,0 |
| Elastomère diénique (1C) | 40,0 | 40,0 | 40,0 | 40,0 |
| Silice (2) | 55,0 | 55,0 | 55,0 | 55,0 |
| Silane (3) | 5,5 | 5,5 | 5,5 | 5,5 |
| DPG (4) | 1,2 | 1,2 | 1,2 | 1,2 |
| Plastifiant (5) | 18,4 | 18,4 | 18,4 | 18,4 |
| ZnO (6) | 5,0 | 5,0 | 5,0 | 5,0 |
| Acide stéarique (7) | 2,0 | 2,0 | 2,0 | 2,0 |
| Cire anti-ozone (8) | 2,0 | 2,0 | 2,0 | 2,0 |
| Anti-Oxydant (9) | 1,0 | 1,0 | 1,0 | 1,0 |
| Soufre | 0,5 | 0,5 | 0,5 | 0,5 |
| CBS | 2,0 | (-) | (-) | (-) |
| MBTS | (-) | 2,0 | (-) | (-) |
| ZBEC | (-) | (-) | (-) | 2,0 |
| TBzTD | (-) | (-) | 2,0 | (-) |

Le mélange comparatif MT1 est obtenu de la manière suivante :
Etape A : On introduit, dans un mélangeur interne « Polylab » de 414 cm³, rempli à 70 % en volume et dont la température initiale de cuve est de 90°C, en une ou plusieurs fois tous les ingrédients du tableau 4. On conduit, pendant 6 min, un travail thermomécanique jusqu'à atteindre une température maximale de tombée de 165°C. On récupère la composition ainsi obtenue, appelée composition C1.
Etape B : Dans un autre mélangeur interne « Polylab » de 414 cm³, rempli à 70 % en volume et dont la température initiale de cuve est de 90°C, on introduit en une ou plusieurs fois tous les ingrédients du tableau 5. On conduit, pendant 6 min, un travail thermomécanique jusqu'à atteindre une température maximale de tombée de 165°C. On récupère la composition ainsi obtenue, appelée composition C2.
Etape C : On introduit ensuite dans un mélangeur interne « Polylab » de 414 cm³, rempli à 70 % en volume la composition C1 obtenue précédemment et la composition C2 précédente et on fournit un travail thermomécanique pendant une durée de 5 min jusqu'à atteindre une température maximale de tombée de 150°C.
Etape D : On introduit ensuite le mélange de l'étape précédente dans un mélangeur externe, tel qu'un mélangeur à cylindre, de manière à refroidir ce mélange jusqu' à une température de 40°C. On incorpore alors le système de vulcanisation (0,5 pce de soufre et 2,0 pce de N-cyclohexyl-2-benzothiazyl-sulfénamide (CBS) commercialisée par Quimica sous la référence « Rubenamid-C » et on mélange pendant 20 min. Le mélange ainsi obtenu est ensuite calandré sous la forme de plaques pour effectuer les mesures de ses propriétés physiques ou mécaniques.

Sauf indications contraires, les propriétés de caoutchouterie du mélange de caoutchouc sont mesurées après cuisson à 170°C pendant 20 min.

**[Table 4]**

| | | |
|---|---|---|
| | Elastomère (1A) | 60,0 |
| | Silice (2) | 15,3 |
| | Silane (3) | 2,2 |
| | DPG (4) | 0,6 |
| Composition 1 | Plastifiant (5) | 11,0 |
| | ZnO (6) | 2,5 |
| | Acide stéarique (7) | 1,00 |
| | Cire anti-ozone (8) | 1,0 |
| | Anti-Oxydant (9) | 0,5 |

**[Table 5]**

| | | |
|---|---|---|
| | Elastomère (1B) | 40,0 |
| | Silice (2) | 39,7 |
| | Silane (3) | 3,3 |
| | DPG (4) | 0,6 |
| Composition 2 | Plastifiant (5) | 7,4 |
| | ZnO (6) | 2,5 |
| | Acide stéarique (7) | 1,0 |
| | Cire anti-ozone (8) | 1,0 |
| | Anti-Oxydant (9) | 0,5 |

Le mélange MT2 est obtenu en reproduisant les étapes A à C du procédé décrit pour le mélange comparatif MT1 ci-dessus avec les compositions C1 et C2 des tableaux respectifs n°4 et n°5. L'étape D décrite précédemment est également reproduite à l'exception que le système de vulcanisation du mélange MT1 (0,5 pce de soufre et 2,0 pce de N-cyclohexyl-2-benzothiazyl-sulfénamide (CBS) commercialisée par Quimica sous la référence « Rubenamid-C » est remplacé par le système de vulcanisation suivant : 0,5 pce de soufre et 2,0 pce de disulfure de tetrabenzylthiurame (TBzTD) commercialisé par la société Harwick sous la référence « Ekaland TBZTD C ».

Le mélange comparatif MT3 est obtenu en reproduisant les étapes A à C du procédé décrit pour le mélange comparatif MT1 avec les compositions C1 et C3 des tableaux respectifs n°4 et n°6. L'étape D décrite précédemment est également reproduite avec le système de vulcanisation du mélange MT1 (i.e. 0,5 pce de soufre et 2,0 pce de N-cyclohexyl-2-benzothiazyl-sulfénamide (CBS) commercialisée par Quimica sous la référence « Rubenamid-C ».

**[Table 6]**

| | | |
|---|---|---|
| | Elastomère (1C) | 40,0 |
| | Silice (3) | 39,7 |
| | Silane (4) | 3,3 |
| | DPG (5) | 0,6 |
| Composition 3 | Plastifiant (6) | 7,4 |
| | Cire anti-ozone (7) | 1,0 |
| | Anti-Oxydant (8) | 0,5 |
| | ZnO (9) | 2,5 |
| | Acide stéarique (10) | 1,0 |

Le mélange MT4 est obtenu en reproduisant les étapes A à C du procédé décrit pour le mélange comparatif MT1 ci-dessus avec les compositions C1 et C3 des tableaux respectif n°4 et n°6. L'étape D décrite précédemment est également reproduite à l'exception que le système de vulcanisation du mélange MT1 (0,5 pce de soufre et 2,0 pce de N-cyclohexyl-2-benzothiazyl-sulfénamide (CBS) commercialisée par Quimica sous la référence « Rubenamid-C » est remplacé par le système de vulcanisation suivant : 0,5 pce de soufre et 2,0 pce de disulfure de 2-mercaptobenzothiazyle (MBTS) commercialisé par la société Quimica sous la référence « Rubator MBTS ».

Le mélange MI1 selon l'invention est obtenu en reproduisant les étapes A à C du procédé décrit pour le mélange comparatif MT1 ci-dessus avec les compositions C1 et C3 des tableaux respectif n°4 et n°6. L'étape D décrite précédemment est également reproduite à l'exception que le système de vulcanisation du mélange MT1 (0,5 pce de soufre et 2,0 pce de N-cyclohexyl-2-benzothiazyl-sulfénamide (CBS) commercialisée par Quimica sous la référence « Rubenamid-C » est remplacé par le système de vulcanisation suivant : 0,5 pce de soufre et 2,0 pce de disulfure de tetrabenzylthiurame (TBzTD) commercialisé par la société Harwick sous la référence « Ekaland TBZTD C ».

Le mélange MI2 selon l'invention est obtenu en reproduisant les étapes A à C du procédé décrit pour le mélange comparatif MT1 ci-dessus avec les compositions C1 et C3 des tableaux respectif n°4 et n°6. L'étape D décrite précédemment est également reproduite à l'exception que le système de vulcanisation du mélange MT1 (0,5 pce de soufre et 2,0 pce de N-cyclohexyl-2-benzothiazyl-sulfénamide (CBS) commercialisée par Quimica sous la référence « Rubenamid-C » est remplacé par le système de vulcanisation suivant : 0,5 pce de soufre et 2,0 pce de dibenzyldithiocabamate de zinc (ZBEC) commercialisé par la société Performance additives sous la réference « Perkacit ZBEC C ».

Les propriétés de caoutchouterie des mélanges MT1 à MT4 et MI1 et MI2, mesurées après cuisson, sont présentées dans les tableaux n°7 et n°8.

**[Table 7]**

| | | MT1 | MT2 |
|---|---|---|---|
| Température de transition vitreuse du mélange (mesurée en °C) | Tg1 | -19°C | -18°C |
| | Tg2 | -49°C | -47°C |
| Profil du facteur de perte | Largeur du pic à mi-hauteur | 17,3°C | 16,6°C |
| Tan δ_{max à 23°C} (en base 100) | | 100 | 100 |
| Tan δ _{à 0°C} (en base 100) | | 100 | 94 |

**[Table 8]**

| | | MT3 | MT4 | MI1 | MI2 |
|---|---|---|---|---|---|
| Température de transition vitreuse du mélange (mesurée en °C) | Tg1 | -18°C | -17°C | -17°C | -18°C |
| | Tg2 | -55°C | -55°C | -55°C | -55°C |
| Profil du facteur de perte | Largeur du pic à mi-hauteur | 23,0°C | 22,9°C | 22,6°C | 21,8°C |
| Tan δ_{max à 23°C} (en base 100) | | 100 | 94 | 107 | 107 |
| Tan δ _{à 0°C} (en base 100) | | 100 | 61 | 113 | 168 |

Lorsqu'on compare le mélange comparatif MT1 et le mélange comparatif MT2, on constate que l'utilisation d'un ultra-accélérateur de vulcanisation de la famille des thiurames à la place d'un accélérateur habituel de vulcanisation de la famille des sulfénamides n'entraîne pas d'améliorations des propriétés d'adhérence sur sol mouillé (Tan δ _{à 0°C}) et de la résistance au roulement (Tan δₘₐₓ à _{23°C}).

De manière surprenante, cet effet n'est pas observé pour le mélange selon l'invention (comparaison du mélange MI1 selon l'invention avec le mélange comparatif MT3). Au contraire de ce qui a été observé pour les mélanges comparatifs MT1 et MT2, l'utilisation de ce même ultra-accélérateur de vulcanisation dans un mélange de caoutchouc dont la phase de plus basse Tg comprend un élastomère isoprénique et une charge renforçante (voir le mélange selon l'invention MI1) permet une amélioration simultanée des propriétés d'adhérence sur sol mouillée et une amélioration de la résistance au roulement (amélioration du descripteur Tan δ_{max à 23°C}) par rapport à un mélange de caoutchouc dont la phase de plus basse Tg comprend élastomère isoprénique et une charge renforçante et dont le système de vulcanisation est à base un accélérateur de vulcanisation habituel (voir mélange comparatif MT3). L'amélioration simultanée des propriétés adhérences sur sol mouillé et de résistance au roulement est également observé avec l'utilisation d'un autre ultra-accélérateur de la famille des dithiocarbamates (mélange selon l'invention MI2) mais pas avec un autre accélérateur de vulcanisation (mélange comparatif MT4).

## Revendications

1. Mélange de caoutchouc présentant au moins deux températures de transition vitreuse Tg, notées Tg1 et Tg2, et à base d'au moins un système de vulcanisation au soufre et d'au moins deux compositions de caoutchouc notées C1 et C2, la composition de caoutchouc C1 comprenant au moins un élastomère E1, et présentant la température de transition vitreuse Tg1, la composition C2 comprenant au moins un élastomère E2, différent de l'élastomère E1, et une charge renforçante, et la composition C2 présentant la température de transition vitreuse Tg2, **caractérisé en ce que** :
- la température de transition vitreuse Tg1 de la composition C1 est supérieure ou égale à -50°C ;
- le mélange de caoutchouc satisfait la relation mathématique Tg1 -Tg2 ≥ 23°C ;
- le mélange de caoutchouc a un profil de facteur de perte présentant l'évolution de tan δ en en fonction de la température en °C, le profil de facteur de perte étant mesuré sur un intervalle de température allant de -80°C à 60 °C à une fréquence de 10 Hz et à une contrainte constante de 0,7 MPa et présentant un ou plusieurs pics, ce profil étant tel que tous les pics de tan δ présents à une température supérieure à la température de transition vitreuse Tg1, présentent une largeur à mi-hauteur inférieure ou égale à 23°C;
- l'élastomère E1 est majoritaire dans le mélange de caoutchouc,
- l'élastomère E2 est un élastomère diénique isoprénique ;
- et le système de vulcanisation au soufre comprend au moins un accélérateur de vulcanisation A choisi le groupe constitué par les thiurames, les dithiocarbamates, les dithiophosphates, les xanthates et leurs mélanges, et où les températures de transition vitreuse Tg1 et Tg2 sont mesurées selon la norme NF EN ISO 11357-2 :05-2014.

2. Mélange de caoutchouc selon la revendication 1, dans lequel le mélange de caoutchouc satisfait la relation mathématique Tg1 -Tg2 ≥ 25°C, de préférence Tg1 -Tg2 ≥ 28°C.

3. Mélange de caoutchouc selon l'une quelconque des revendications précédentes, dans lequel la température de transition vitreuse Tg1 de la composition de caoutchouc C1 est supérieure ou égale à -48°C, de préférence supérieure ou égale à -40°C.

4. Mélange de caoutchouc selon l'une quelconque des revendications précédentes, dans lequel la température de transition vitreuse Tg2 de la composition C2 est inférieure ou égale à -43°C, de préférence inférieure ou égale à -50°C.

5. Mélange de caoutchouc selon l'une quelconque des revendications précédentes, dans lequel l'élastomère E1 de la composition de caoutchouc C1 est un élastomère diénique choisi dans le groupe constitué par les polybutadiènes, les copolymères de butadiène et de styrène, les copolymères de butadiène et d'isoprène, les copolymères d'isoprène et de styrène et les copolymères de butadiène-styrène-isoprène et leurs mélanges; plus préférentiellement l'élastomère E1 de la composition de caoutchouc C1 est un élastomère diénique choisi dans le groupe constitué par les polybutadiènes, les copolymères de butadiène et de styrène et leurs mélanges.

6. Mélange de caoutchouc selon l'une quelconque des revendications précédentes, dans lequel le taux de l'élastomère E1 dans le mélange de caoutchouc peut être compris dans un domaine allant 50 pce à 70 pce, de préférence de 55 pce à 70 pce, plus préférentiellement de 55 pce à 65 pce

7. Mélange de caoutchouc selon l'une quelconque des revendications précédentes, dans lequel l'élastomère E2 diénique isoprénique de la composition de caoutchouc C2 est choisi dans le groupe constitué par le caoutchouc naturel et le polyisoprène de synthèse, de préférence l'élastomère E2 diénique isoprénique de la composition de caoutchouc C2 est le caoutchouc naturel.

8. Mélange de caoutchouc selon l'une quelconque des revendications précédentes, dans lequel la charge renforçante de la composition C2 comprend majoritairement au moins une charge renforçante inorganique, plus préférentiellement comprend majoritairement au moins une silice.

9. Mélange de caoutchouc selon l'une quelconque des revendications précédentes, dans lequel l'accélérateur de vulcanisation A est choisi dans le groupe constitué par le disulfure de tetrabenzylthiurame (TBzTD), le monosulfure de tétraméthyl thiurame (TMTM), le disulfure de tétraméthyl thiurame (TMTD), le disulfure de tétraéthyl thiurame (TETD), le disulfure de tétra isobutyl thiurame (TiBTD), le tétrasulfure de dipentaméthylène thiurame (DPTT), le dibutyl dithiocarbamate de zinc (ZDBC), le diéthyl dithiocarbamate de zinc, le diméthyl dithiocarbamate de zinc, le diméthyl dithiocarbamate de cuivre, le diéthyl ditiocarbamate de tellure (TDEC), le di-isononyl dithiocarbamate de zinc, le pentaméthylène dithiocarbamate de zinc, le dibenzyldithiocarbamate de zinc (ZBEC), l'iso-propyl xanthate de zinc (ZIX), le butyle xanthate de zinc (ZBX), l'éthyle xanthate de sodium (SEX), l'iso-butyle xanthate de sodium (SIBX), l'iso-propyle xanthate de sodium (SIPX), le n-butyl xanthate de sodium (SNBX), l'amyle xanthate de sodium (SAX), l'éthyle xanthate de potassium (PEX), l'amyle xanthate de potassium (PAX), le 2-éthylhexylphosphorodithioate de zinc (ZDT/S), et les mélanges de ces composés.

10. Mélange de caoutchouc selon l'une quelconque des revendications précédentes, dans lequel l'accélérateur de vulcanisation A est choisi dans le groupe constitué le disulfure de tetrabenzylthiurame (TBzTD), le monosulfure de tétraméthylthiurame (TMTM), le disulfure de tétraméthylthiurame (TMTD), le disulfure de tétraéthyl thiurame (TETD), le disulfure de tétra isobutylthiurame (TiBTD), le tétrasulfure de dipentaméthylène thiurame (DPTT), le dibutyl dithiocarbamate de zinc (ZDBC), le diéthyl dithiocarbamate de zinc, le diméthyl dithiocarbamate de zinc, le di-isononyl dithiocarbamate de zinc, le pentaméthylène dithiocarbamate de zinc, le dibenzyldithiocarbamate de zinc (ZBEC), et les mélanges de ces composés.

11. Mélange de caoutchouc selon l'une quelconque des revendications précédentes, dans lequel le taux de l'accélérateur de vulcanisation A est compris dans un domaine allant de 0,5 à 10 pce, plus préférentiellement 1,0 à 4,5 pce, plus préférentiellement allant de 1,0 à 3 pce.

12. Mélange de caoutchouc selon l'une quelconque des revendications précédentes, dans lequel le système de vulcanisation au soufre comprend de l'oxyde de zinc, le rapport du taux de l'oxyde de zinc exprimé en pce sur le taux de l'accélérateur de vulcanisation A exprimé en pce est compris dans un domaine allant de 0,05 à 20, plus préférentiellement encore, allant de 0,22 à 7.

13. Mélange de caoutchouc selon l'une quelconque des revendications précédentes, dans lequel le rapport du taux de soufre exprimé en pce sur le taux de l'accélérateur de A vulcanisation exprimé en pce est compris dans un domaine allant de 0,05 à 24, plus préférentiellement encore, allant de 0,16 à 10.

14. Bande de roulement de bandage pneumatique ou non pneumatique comprenant au moins un mélange défini selon l'une quelconque des revendications 1 à 13.

15. Bandage pneumatique ou non pneumatique comprenant au moins un mélange défini selon l'une quelconque des revendications 1 à 13 ou une bande de roulement selon la revendication 14.

## Patentansprüche

1. Kautschukmischung, die mindestens zwei als Tg1 und Tg2 bezeichnete Glasübergangstemperaturen Tg aufweist und auf mindestens einem Schwefelvulkanisationssystem und zwei als C1 und C2 bezeichneten Kautschukzusammensetzungen basiert, wobei die Kautschukzusammensetzung C1 mindestens ein Elastomer E1 umfasst und die Glasübergangstemperatur Tg1 aufweist, wobei die Zusammensetzung C2 mindestens ein Elastomer E2, das von dem Elastomer E1 verschieden ist, und einen verstärkenden Füllstoff umfasst, und wobei die Zusammensetzung C2 die Glasübergangstemperatur Tg2 aufweist, **dadurch gekennzeichnet, dass**:
- die Glasübergangstemperatur Tg1 der Zusammensetzung C1 größer oder gleich -50 °C ist;
- die Kautschukmischung die mathematische Beziehung Tg1 -Tg2 ≥ 23 °C erfüllt;
- die Kautschukmischung ein Verlustfaktorprofil hat, das den Verlauf von tan δ als Funktion der Temperatur in °C aufweist, wobei das Verlustfaktorprofil über ein Temperaturintervall von -80 °C bis 60 °C bei einer Frequenz von 10 Hz und bei einer konstanten Spannung von 0,7 MPa gemessen wird und einen oder mehrere Peaks aufweist, wobei dieses Profil dergestalt ist, dass alle Peaks von tan δ, die bei einer Temperatur über der Glasübergangstemperatur Tg1 vorhanden sind, eine Halbwertsbreite kleiner oder gleich 23 °C aufweisen;
- das Elastomer E1 in der Kautschukmischung überwiegt,
- das Elastomer E2 ein Isopren-Dien-Elastomer ist;
- und das Schwefelvulkanisationssystem mindestens einen Vulkanisationsbeschleuniger A umfasst, der aus der Gruppe bestehend aus Thiuramen, Ditiocarbamaten, Dithiophosphaten, Xanthaten und ihren Mischungen gewählt ist, und wobei die Glasübergangstemperaturen Tg1 und Tg2 nach der Norm NF EN ISO 11357-2:05-2014 gemessen werden.

2. Kautschukmischung nach Anspruch 1, wobei die Kautschukmischung die mathematische Beziehung Tg1-Tg2 ≥ 25 °C, bevorzugt Tg1-Tg2 ≥ 28 °C, erfüllt.

3. Kautschukmischung nach einem der vorhergehenden Ansprüche, wobei die Glasübergangstemperatur Tg1 der Kautschukzusammensetzung C1 größer oder gleich -48 °C, bevorzugt größer oder gleich -40 °C, ist.

4. Kautschukmischung nach einem der vorhergehenden Ansprüche, wobei die Glasübergangstemperatur Tg2 der Zusammensetzung C2 kleiner oder gleich -43 °C, bevorzugt kleiner oder gleich -50 °C, ist.

5. Kautschukmischung nach einem der vorhergehenden Ansprüche, wobei das Elastomer E1 der Kautschukzusammensetzung C1 ein Dien-Elastomer ist, das aus der Gruppe bestehend aus Polybutadienen, Butadien-Styrol-Copolymeren, Butadien-Isopren-Copolymeren, Isopren-Styrol-Copolymeren und Butadien-Styrol-Isopren-Copolymeren und ihren Mischungen gewählt ist,; das Elastomer E1 der Kautschukzusammensetzung C1 noch bevorzugter ein Dien-Elastomer ist, das aus der Gruppe bestehend aus Polybutadienen, Butadien-Styrol-Copolymeren und ihren Mischungen gewählt ist.

6. Kautschukmischung nach einem der vorhergehenden Ansprüche, wobei der Anteil des Elastomers E1 in der Kautschukmischung in einem Bereich von 50 phr bis 70 phr, bevorzugt von 55 phr bis 70 phr, noch bevorzugter von 55 phr bis 65 phr, liegt.

7. Kautschukmischung nach einem der vorhergehenden Ansprüche, wobei das Isopren-Dien-Elastomer E2 der Kautschukzusammensetzung C2 aus der Gruppe bestehend aus Naturkautschuk und synthetischem Polyisopren gewählt ist, das Isopren-Dien-Elastomer E2 der Kautschukzusammensetzung C2 bevorzugt Naturkautschuk ist.

8. Kautschukmischung nach einem der vorhergehenden Ansprüche, wobei der verstärkende Füllstoff der Zusammensetzung C2 überwiegend mindestens einen anorganischen verstärkenden Füllstoff umfasst und noch bevorzugter überwiegend mindestens eine Kieselsäure umfasst.

9. Kautschukmischung nach einem der vorhergehenden Ansprüche, wobei der Vulkanisationsbeschleuniger A aus der Gruppe bestehend aus Tetrabenzylthiuramdisulfid (TBzTD), Tetramethylthiurammonosulfid (TMTM), Tetramethylthiuramdisulfid (TMTD), Tetraethylthiuramdisulfid (TETD), Tetraisobutylthiuramdisulfid (TiBTD), Dipentamethylenthiuramtetrasulfid (DPTT), Zinkdibutyldithiocarbamat (ZDBC), Zinkdiethyldithiocarbamat, Zinkdimethyldithiocarbamat, Kupferdimethyldithiocarbamat, Tellurdiethyldithiocarbamat (TDEC), Zinkdiisononyldithiocarbamat, Zinkpentamethylendithiocarbamat, Zinkdibenzyldithiocarbamat (ZBEC), Zinkisopropylxanthat (ZIX), Zinkbutylxanthat (ZBX), Natriumethylxanthat (SEX), Natriumisobutylxanthat (SIBX), Natriumisopropylxanthat (SIPX), Natrium-n-butylxanthat (SNBX), Natriumamylxanthat (SAX), Kaliumethylxanthat (PEX), Kaliumamylxanthat (PAX), Zink-2-ethylhexylphosphordithioat (ZDT/S) und den Mischungen dieser Verbindungen gewählt ist.

10. Kautschukmischung nach einem der vorhergehenden Ansprüche, wobei der Vulkanisationsbeschleuniger A aus der Gruppe bestehend aus Tetrabenzylthiuramdisulfid (TBzTD), Tetramethylthiurammonosulfid (TMTM), Tetramethylthiuramdisulfid (TMTD), Tetraethylthiuramdisulfid (TETD), Tetraisobutylthiuramdisulfid (TiBTD), Dipentamethylenthiuramtetrasulfid (DPTT), Zinkdibutyldithiocarbamat (ZDBC), Zinkdiethyldithiocarbamat, Zinkdimethyldithiocarbamat, Zinkdiisononyldithiocarbamat, Zinkpentamethylendithiocarbamat, Zinkdibenzyldithiocarbamat (ZBEC) und den Mischungen dieser Verbindungen gewählt ist.

11. Kautschukmischung nach einem der vorhergehenden Ansprüche, wobei der Anteil des Vulkanisationsbeschleunigers A in einem Bereich von 0,5 bis 10 phr, noch bevorzugter von 1,0 bis 4,5 phr, noch stärker bevorzugt von 1,0 bis 3 phr, liegt.

12. Kautschukmischung nach einem der vorhergehenden Ansprüche, wobei das Schwefelvulkanisationssystem Zinkoxid umfasst, wobei das Verhältnis des Anteils des Zinkoxids, ausgedrückt in phr, zum Anteil des Vulkanisationsbeschleunigers A, ausgedrückt in phr, in einem Bereich von 0,05 bis 20, noch bevorzugter von 0,22 bis 7, liegt.

13. Kautschukmischung nach einem der vorhergehenden Ansprüche, wobei das Verhältnis des Schwefelanteils, ausgedrückt in phr, zum Anteil des Vulkanisationsbeschleunigers A, ausgedrückt in phr, in einem Bereich von 0,05 bis 24, noch bevorzugter von 0,16 bis 10, liegt.

14. Laufstreifen eines Luftreifens oder luftlosen Reifens, umfassend mindestens eine Mischung nach einem der Ansprüche 1 bis 13.

15. Luftreifen oder luftloser Reifen, umfassend mindestens eine Mischung nach einem der Ansprüche 1 bis 13 oder einen Laufstreifen nach Anspruch 14.

## Claims

1. Rubber compound having at least two glass transition temperatures Tg, denoted Tg1 and Tg2 and based on at least one sulfur vulcanization system and at least two rubber compositions, denoted C1 and C2, the rubber composition C1 comprising at least one elastomer E1 and having the glass transition temperature Tg1, the composition C2 comprising at least one elastomer E2, different from the elastomer E1, and a reinforcing filler, and the composition C2 having the glass transition temperature Tg2, **characterized in that**:
- the glass transition temperature Tg1 of the composition C1 is above or equal to -50°C;
- the rubber compound satisfies the mathematical relationship Tg1-Tg2 ≥ 23°C;
- the rubber compound has a loss factor profile exhibiting the change in tan δ as a function of the temperature in °C, the loss factor profile being measured over a temperature range extending from -80°C to 60°C at a frequency of 10 Hz and a constant stress of 0.7 MPa and exhibiting one or more peaks, this profile being such that all the tan δ peaks present at a temperature above the glass transition temperature Tg1 have a width at half height below or equal to 23°C;
- the elastomer E1 is predominant in the rubber compound,
- the elastomer E2 is an isoprene diene elastomer;
- and the sulfur vulcanization system comprises at least one vulcanization accelerator A selected from the group consisting of thiurams, dithiocarbamates, dithiophosphates, xanthates and mixtures thereof
and wherein e glass transition temperature Tg1 and Tg2 are measured according to the standard NF EN ISO11357-2:05-2014.

2. Rubber compound according to Claim 1, in which the rubber compound satisfies the mathematical relationship Tg1-Tg2 ≥ 25°C, preferably Tg1-Tg2 ≥ 28°C.

3. Rubber compound according to either one of the preceding claims, in which the glass transition temperature Tg1 of the rubber composition C1 is above or equal to -48°C, preferably above or equal to -40°C.

4. Rubber compound according to any one of the preceding claims, in which the glass transition temperature Tg2 of the composition C2 is below or equal to -43°C, preferably below or equal to -50°C.

5. Rubber compound according to any one of the preceding claims, in which the elastomer E1 of the rubber composition C1 is a diene elastomer selected from the group consisting of polybutadienes, butadiene/styrene copolymers, butadiene/isoprene copolymers, isoprene/styrene copolymers and butadiene/styrene/isoprene copolymers and mixtures thereof; more preferably the elastomer E1 of the rubber composition C1 is a diene elastomer selected from the group consisting of polybutadienes, butadiene/styrene copolymers and mixtures thereof.

6. Rubber compound according to any one of the preceding claims, in which the content of the elastomer E1 in the rubber compound may be within a range extending from 50 phr to 70 phr, preferably from 55 phr to 70 phr, more preferentially from 55 phr to 65 phr.

7. Rubber compound according to any one of the preceding claims, in which the isoprene diene elastomer E2 of the rubber composition C2 is selected from the group consisting of natural rubber and synthetic polyisoprene; preferably, the isoprene diene elastomer E2 of the rubber composition C2 is natural rubber.

8. Rubber compound according to any one of the preceding claims, in which the reinforcing filler of the composition C2 predominantly comprises at least one inorganic reinforcing filler, more preferentially predominantly comprises at least one silica.

9. Rubber compound according to any one of the preceding claims, in which the vulcanization accelerator A is selected from the group consisting of tetrabenzylthiuram disulfide (TBzTD), tetramethyl thiuram monosulfide (TMTM), tetramethyl thiuram disulfide (TMTD), tetraethyl thiuram disulfide (TETD), tetraisobutyl thiuram disulfide (TiBTD), dipentamethylene thiuram tetrasulfide (DPTT), zinc dibutyl dithiocarbamate (ZDBC), zinc diethyl dithiocarbamate, zinc dimethyl dithiocarbamate, copper dimethyl dithiocarbamate, tellurium diethyl dithiocarbamate (TDEC), zinc diisononyl dithiocarbamate, zinc pentamethylene dithiocarbamate, zinc dibenzyldithiocarbamate (ZBEC), zinc isopropyl xanthate (ZIX), zinc butyl xanthate (ZBX), sodium ethyl xanthate (SEX), sodium isobutyl xanthate (SIBX), sodium isopropyl xanthate (SIPX), sodium n-butyl xanthate (SNBX), sodium amyl xanthate (SAX), potassium ethyl xanthate (PEX), potassium amyl xanthate (PAX), zinc 2-ethylhexylphosphorodithioate (ZDT/S), and the mixtures of these compounds.

10. Rubber compound according to any one of the preceding claims, in which the vulcanization accelerator A is selected from the group consisting of tetrabenzyl thiuram disulfide (TBzTD), tetramethyl thiuram monosulfide (TMTM), tetramethyl thiuram disulfide (TMTD), tetraethyl thiuram disulfide (TETD), tetraisobutyl thiuram disulfide (TiBTD), dipentamethylene thiuram tetrasulfide (DPTT), zinc dibutyl dithiocarbamate (ZDBC), zinc diethyl dithiocarbamate, zinc dimethyl dithiocarbamate, zinc diisononyl dithiocarbamate, zinc pentamethylene dithiocarbamate, zinc dibenzyldithiocarbamate (ZBEC), and mixtures of these compounds.

11. Rubber compound according to any one of the preceding claims, in which the content of vulcanization accelerator A is within a range extending from 0.5 to 10 phr, more preferentially 1.0 to 4.5 phr, more preferentially extending from 1.0 to 3 phr.

12. Rubber compound according to any one of the preceding claims, in which the sulfur vulcanization system comprises zinc oxide, the ratio of the zinc oxide content, expressed in phr, to the vulcanization accelerator A content, expressed in phr, is within a range extending from 0.05 to 20, even more preferentially extending from 0.22 to 7.

13. Rubber compound according to any one of the preceding claims, in which the ratio of the content of sulfur, expressed in phr, to the content of vulcanization accelerator A, expressed in phr, is within a range extending from 0.05 to 24, even more preferentially extending from 0.16 to 10.

14. Pneumatic or non-pneumatic tyre tread comprising at least one compound defined according to any one of Claims 1 to 13.

15. Pneumatic or non-pneumatic tyre comprising at least one compound defined according to any one of Claims 1 to 13 or a tread according to Claim 14.
